# EUROPÄISCHE PATENTSCHRIFT

(11) **EP 3 271 527 B1**
(45) Veröffentlichungstag und Bekanntmachung des Hinweises auf die Patenterteilung: **22.04.2020**
(21) Anmeldenummer: 16714222.3
(22) Anmeldetag: 16.03.2016
(51) Int. Cl.: E04F 15/10, E04F 15/02, B27F 1/02, B27M 3/04, F16B 5/00

(54) **MECHANISCHE VERBINDUNG FÜR PANEELE UND VERFAHREN ZUR HERSTELLUNG VON VERBINDUNGSMITTELN**
MECHANICAL CONNECTION FOR PANELS AND METHOD FOR PRODUCING CONNECTING MEANS
ASSEMBLAGE MÉCANIQUE POUR DES PANNEAUX ET PROCÉDÉ SERVANT À FABRIQUER DES MOYENS D'ASSEMBLAGE

(30) Priorität: 19.03.2015 DE 102015104158; 26.03.2015 DE 202015101541 U; 30.04.2015 DE 102015106794
(43) Veröffentlichungstag der Anmeldung: 24.01.2018
(73) Patentinhaber: Schulte, Guido, 59602 Rüthen-Meiste (DE)
(72) Erfinder: SCHULTE, Guido, 59602 Rüthen-Meiste (DE); ESCHLBECK, Franz-Josef, 83209 Prien am Chiemsee (DE)
(74) Vertreter: Griepenstroh, Jörg
(86) Internationale Anmeldenummer: PCT/DE2016/100124
(87) Internationale Veröffentlichungsnummer: WO 2016/146112

(56) Entgegenhaltungen:
- EP-A1- 0 458 242
- DE-A1-102011 122 086
- DE-U1-202010 017 748

## Beschreibung

Die Erfindung betrifft mechanische Verbindungen für Paneele, die zu einem Belag miteinander verbindbar sind sowie ein Verfahren zur Herstellung von Verbindungsmitteln an einer Randseite eines Paneels.

Wand-, Decken- und Bodenbeläge, wie zum Beispiel Fertigparkett, Echtholzböden oder Laminatfußböden, bestehen aus mehreren Reihen von in ihrer Konfiguration vorwiegend rechteckigen Paneelen. Konventionell besitzen die Paneele auf einer Längsseite und auf einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Paneele verlegt, wobei die Paneele zweier benachbarter Reihen versetzt zueinander angeordnet werden.

Es ist bekannt, an den Nuten und Federn mechanische Verriegelungsmittel auszubilden, welche bei in einem Fußbodenbelag benachbarten Paneelen miteinander in rastenden Eingriff gelangen. Hierdurch soll eine Fugenbildung bedingt durch Dehnungs- oder Schrumpfungsvorgänge vermieden werden. An die Nut und Feder der Paneele sind aneinander angepasste Verriegelungselemente in Form von Vertiefungen, Ausnehmungen oder Vorsprüngen ausgebildet, um die Paneele in der zusammengefügten Lage leimlos zu halten. In der Regel werden die Paneele entlang ihrer Längsseiten ineinander gedreht oder geklickt und anschließend seitlich verschoben, so dass Verriegelungsleisten an den Kopfseiten in Eingriff gelangen.

Es gibt auch Lösungen, bei denen die aneinander stoßenden Kopfseiten durch verlagerbare Federn miteinander verbunden werden. Die WO 2011/012104 A2 beschreibt ein solches System aus mechanisch miteinander verbindbaren Paneelen. Bei diesem System besitzen die zueinander komplementären Seiten jeweils eine Nut mit unterschiedlich langen oberen und unteren Nutwangen. In einer der Nuten ist eine Feder gehalten. Der aus der Nut herausragende Teil der Feder ist verlagerbar und dafür vorgesehen, in die korrespondierende Nut des benachbarten Paneels einzugreifen. Hierzu besitzt die Feder einen Vorsprung, der beim Zusammenfügen an die längere Nutwange des anderen Paneels stößt. Hierdurch wird die Feder so verschoben, dass sie in der zusammengebauten Position in die benachbarte Nut greift und die beiden Paneele miteinander verriegelt. Bei diesem System wird das freie Ende der Feder in die benachbarte Nut geschoben.

Zum Stand der Technik zählen auch Systeme, bei denen nicht das freie Ende der Feder, sondern ein mittlerer Bereich der Feder in die Nut des benachbarten Elementes verlagert wird (EP 2 037 128 A1). Dabei wird ein Teil der Feder hinter eine Verriegelungskante geschoben, die sich in demselben Paneel befindet, in dem die Feder mit ihrem Fuß gehalten ist. Die Feder wird anders als bei dem in der WO 2011/012104 A2 beschriebenen Prinzip nicht auseinandergefaltet, sondern gewissermaßen zusammengefaltet, wobei der gefaltete Bereich, nicht aber das freie Ende der Feder in Richtung des benachbarten Paneels verlagert wird.

In der EP 2 230 065 A1 wird ein System beschrieben, bei welchem in einem zuerst zu verlegenden Paneel eine schwenkbeweglich gelagerte Feder vormontiert ist. Ein unteres, bewegliches Ende der Feder wird beim Ablegen des zweiten Paneels tiefer in eine Nut am ersten Paneel hineingedrückt. Die Feder wird dabei in einer Art und Weise verschwenkt, dass ein oberer Teil der Feder aus dem ersten Paneel herausverlagert wird und mit dem zweiten Paneel in Eingriff gelangt.

Ein ähnliches Prinzip wird in der WO 2009/006153 A2 beschrieben. Es ist an einem bereits verlegten Paneel eine Feder mit einem gelenkigen Arm befestigt, der an seinem oberen Ende in einer Nut gelenkig gehalten ist. Beim Ablegen des zweiten Paneels wird ein freies Ende des Arms gegen eine Federkraft zurückgedrückt, bis es beim Erreichen der Verriegelungsstellung zurückfedert und in das zweite Paneel schnappt. In ähnlicher Weise kann eine solch Feder auch an dem zweiten zu verlegendem Paneel montiert sein. Beide Vorschläge haben gemeinsam, dass die Feder über eine Stirnseite des Paneels vorsteht und zum Verriegeln zunächst zurückgedrängt werden muss, bevor sie anschließend in eine Rastnut des gegenüberliegenden Paneels eingreift. Auch in der EP 2 829 668 A1 wird vorgeschlagen, eine elastische Verriegelungsfeder, die aus einer Haltenut vorsteht, beim Ablegen des zweiten Paneels zunächst zurückzudrücken, damit diese bei Erreichen der Montagestellung anschließend wieder in ihre Ausgangsposition zurückfedern kann und die beiden Paneele miteinander verrastet.

Aus der DE 20 2010 017 748 U1 ist ein Belag aus mechanisch miteinander verbindbaren Elementen bekannt, wobei mindestens einer der Elemente ein Paneel ist. An ihren gegenüberliegenden Seiten besitzen die Elemente eine zueinander korrespondierende Profilierung, mittels welcher benachbarte Elemente mittels einer im Wesentlichen vertikalen oder schwenkenden Fügebewegung in horizontaler Richtung und vertikaler Richtung miteinander verriegelbar sind. Die Verriegelung ist durch zumindest ein an einem der Elemente angelenktes Federelement bewirkbar und ist bei der Fügebewegung hinter eine sich im Wesentlichen in horizontale Richtung erstreckende Verriegelungskante des anderen Elements verschwenkbar. An den Elementen können zusätzliche Verriegelungsleisten vorgesehen sein, um zusätzlich zu der Verriegelung in vertikaler Richtung auch die Verriegelung in der Verlegeebene zu bewirken. Beim Fügen der benachbarten Elemente gleitet das Federelement auf einer der Verriegelungskante gegenüberliegenden Stützfläche des benachbarten Elements ab. Das Federelement ist in der Verriegelungsposition zwischen der Verriegelungskante und der Stützfläche klemmgehaltert. Dadurch kann sich das Federelement nicht selbsttätig zurückbewegen, da es sich an der Stützfläche abstützt. Es ist auch denkbar, bei einer formschlüssigen Fixierung des Federelements einen Fuß vorzusehen, der in einer Ausnehmung des Elements gehalten ist.

Die DE 10 2011 122 086 A1 offenbart ein System bestehend aus zwei miteinander verbundenen und zueinander in horizontaler und vertikaler Richtung verriegelten Bauplatten desselben Typs. Die Bauplatten weisen ein im Wesentlichen L-förmiges Verriegelungselement mit einem kurzen Schenkel und einem langen Schenkel auf. Jede Bauplatte ist mit einer ersten Seitenkante versehen, die mit einer zweiten Seitenkante einer anderen Bauplatte durch eine im Wesentlichen vertikale Fügebewegung verbunden wird. Die vertikale Verriegelung der beiden Bauplatten erfolgt nach abgeschlossener Fügebewegung selbsttätig durch das Verriegelungselement. Die horizontale Verriegelung der beiden Bauplatten erfolgt durch eine an den gegenüberliegenden Seitenkanten vorgesehene Profilierung, wobei die Profilierung an der ersten Seitenkante mit einem nach unten ragenden Absatz versehen ist, der mit einem an der zweiten Seitenkante vorgesehenen nach oben ragenden Vorsprung zur Verriegelung in horizontaler Richtung zusammenwirkt. Die erste Seitenkante ist in ihrer Profilierung mit einer parallel zur Oberseite der Bauplatte verlaufenden ersten Nut versehen. Das System zeichnet sich dadurch aus, dass in der Profilierung der zweiten Seitenkante eine parallele oder in einem Winkel zur Oberseite der Bauplatte verlaufende zweite Nut vorgesehen ist und am langen Schenkel des Verriegelungselements ein Fortsatz angeordnet ist, der in eine zum kurzen Schenkel entgegengerichtete Richtung weist und dass der Fortsatz in der zweiten Nut verankert ist.

Die EP 0 458 242 A1 beschreibt ein Verfahren zur Herstellung eines plattenförmigen Werkstücks mit einer sogenannten Postforming-Kante. Nach den beschriebenen Verfahren wird eine Kante einer Platte mit wenigstens einer, sich in Längsrichtung erstreckenden Profilfräsung versehen, wobei durch Spanabnahme von der Platte ein Freilegen einer Beschichtung der Platte erfolgt. Durch eine weitere Spanabnahme vom Plattenkörper wird ein keilförmiges Teilstück freigelegt, das mit seiner Spitze über das Beschichtungsmaterial mit dem Plattenkörper verbunden ist. Im Anschluss erfolgt eine Beleimung der Begrenzungswände des in den Plattenkörper eingearbeiteten Hohlraums sowie ein Abbiegen des keilförmigen Teilstücks zum Plattenkörper und ein Anleimen desselben am Plattenkörper. Anschließend wird eine Besäumung der so erstellten Plattenkante durchgeführt, wobei ein Umbiegen der vorher freigelegten Beschichtungsmaterials um die profilierte Kante und ein Anleimen des Beschichtungsmaterials an der Kante erfolgt.

Der Erfindung liegt die Aufgabe zugrunde, eine mechanische Verbindung für Paneele, die insbesondere zu einem Bodenbelag miteinander verbindbar sind, aufzuzeigen, bei welcher der Verriegelungsmechanismus es nicht erforderlich macht, einen Verriegelungskörper eines Federbauteils zunächst zurückzudrücken, bevor dieser in die Rastposition gelangt. Ferner liegt der Erfindung die Aufgabe zugrunde ein Verfahren zur Herstellung von Verbindungsmitteln an einer Randseite eines Paneels zu optimieren.

Der gegenständliche Teil der Aufgabe ist bei einer mechanischen Verbindung mit den Merkmalen des Patentanspruchs 1 gelöst. Ein Verfahren zur Herstellung von Verbindungsmitteln an einer Randseite eines Paneels ist Gegenstand des Anspruchs 18. Vorteilhafte Weiterbildungen der Erfindung sind Gegenstand der Unteransprüche.

Die mechanische Verbindung für Paneele ist zusammengefasst durch folgende Merkmale gekennzeichnet:
a. Die Paneele besitzen eine Horizontalverbindung und eine Vertikalverbindung an ihren miteinander zu verbindenden Randseiten. Das zuerst zu verlegende erste Paneel umgreift das anschließend zu verlegende, zweite Paneel zur Horizontalverriegelung. Zur Vertikalverriegelung sind an dem ersten Paneel eine Verriegelungskante und an dem zweiten Paneel eine Feder angeordnet, die hinter die Verriegelungskante verlagerbar ist.
b. Die Feder besitzt einen in einer Haltenut angeordneten Fuß und einen außerhalb der Haltenut angeordneten Kopf, der gelenkig mit dem Fuß verbunden ist. Der Kopf besitzt einen zur Oberseite des zweiten Paneels weisenden Verriegelungsarm zum Verschwenken hinter die Verriegelungskante und einen zur Unterseite des zweiten Paneels weisenden Hebel zum Verschwenken des Verriegelungsarms. Der Kopf ist in einem Bereich zwischen Verriegelungsarm und Hebel mit dem Fuß verbunden. Ein freies unteres Ende des Hebels ist vor dem Ablegen des zweiten Paneels im Abstand vom zweiten Paneel. Ein freies, oberes Ende des Verriegelungsarms ist vor dem Ablegen des zweiten Paneels in Kontakt mit dem zweiten Paneel.
c. Das erste Paneel besitzt eine Führungsfläche, mit welcher der Hebel beim Ablegen in Eingriff bringbar ist, um den Hebel in Richtung zum zweiten Paneel um das Gelenk zu verschwenken und mittels des Hebels das obere Ende des Verriegelungsarms weg vom zweiten Paneel hinter die Verriegelungskante zu verlagern.

Die erfindungsgemäße mechanische Verbindung basiert auf dem Prinzip, dass die Feder nur ein einziges Mal zum Verriegeln verlagert werden soll. Sie ist in einer Ausgangsstellung gehalten und soll in die Verriegelungsstellung verschwenkt werden. Das Verschwenken erfolgt also nicht bidirektional, sondern unidirektional über den Kontakt des Hebels mit der Führungsfläche.

Die Paneele besitzen eine Horizontalverbindung und eine Vertikalverbindung an ihren miteinander zu verbindenden Randseiten. Die Horizontalverbindung ist dadurch herstellbar, dass das zuerst zu verlegende Paneel das anschließend zu verlegende zweite Paneel untergreift. Hierzu sind an den Paneelen nach oben bzw. nach unten offene Nuten und Vorsprünge vorgesehen, die zur Horizontalverrieglung miteinander in Eingriff bringbar sind. Die Horizontalverrieglung kann auch durch ein separates Verriegelungselement bewirkt sein, das unterseitig der Paneele angeordnet ist, z. B. in Form einer separaten Klammer.

Die Vertikalverrieglung wird durch die Feder bewirkt, die hinter die Verriegelungskante des anderen Paneels verlagerbar ist. Die Feder ist nur an dem zweiten Paneel angeordnet.

Die Feder ist hierzu mit einem Fuß ausgestattet. Der Fuß ist in einer Haltenut gehalten. Funktional betrachtet muss die Haltenut nur so tief sein, dass der Fuß sicher gehalten ist. Ferner besitzt die Feder einen zumindest teilweise aus der Haltenut ragenden Kopf, der gelenkig mit dem Fuß verbunden ist. Insbesondere befindet sich der gesamte Kopf außerhalb der Haltenut. Der Kopf ist der bewegliche Teil der Feder. Der Fuß ist der feststehende Teil der Feder.

Der Kopf besitzt einen Verriegelungsarm und einen Hebel. Der Verriegelungsarm weist an seinem freien Ende zur Oberseite des zweiten Paneels. Der Verriegelungsarm ist dafür vorgesehen, hinter eine Verriegelungskante des benachbarten Paneels verschwenkt zu werden. Der Hebel zum Verschwenken des Verriegelungsarms weist zur Unterseite des zweiten Paneels. Der Kopf ist zwischen Verriegelungsarm und Hebel über ein Gelenk mit dem Fuß verbunden. Der Verriegelungsarm und der Hebel weisen daher in entgegengesetzte Richtungen.

Bevorzugt ist die Feder im Querschnitt T-förmig oder hammerförmig konfiguriert, wobei der Schaft als Fuß dient und der Kopf schwenkbeweglich am Schaft bzw. Fuß gelagert ist. Funktional trennt die Position des Gelenkes den Kopf in zwei Bereiche, nämlich den Verriegelungsarm und den Hebel. Zwischen Verriegelungsarm und Hebel besteht eine im Wesentlichen biegesteife Verbindung ohne maßgebliche Schwächung, damit die Verlagerung des Hebels zu einem Verschwenken des Verriegelungsarms führt. Das Gelenk ist nur zwischen Kopf und Fuß wirksam.

In einer unverriegelten Ausgangsstellung befindet sich ein freies unteres Ende des Hebels vor dem Ablegen des zweiten Paneels im Abstand vom zweiten Paneel. Dadurch besteht genügend Spielraum, um das freie Ende in Richtung des zweiten Paneels um den höher gelegenen Gelenkpunkt zu verschwenken. Das obere Ende des Verriegelungsarms steht in der Ausgangsstellung in Kontakt mit dem zweiten Paneel. Der Kontakt ist gleichzeitig eine Schwenkbegrenzung. Das heißt, dass der Verriegelungsarm beim Ablegen nicht weiter an das erste Paneel angenähert werden kann. Er wird daher auch nicht beim Ablegen zurückgedrückt, so dass die miteinander zu verbindenden Randseiten ohne Überwindung etwaiger Rückstellkräfte der Feder eng aneinander anliegend positioniert werden können und dann das zweite Paneel nur noch abgelegt werden muss, um die Verriegelung herzustellen.

Die Verriegelung wird dadurch eingeleitet, dass der Hebel mit einer Führungsfläche am ersten Paneel in Kontakt kommt. Die Führungsfläche befindet sich unterhalb der Verriegelungskante. Der Kontaktpunkt des Hebels mit der Führungsfläche befindet sich immer unterhalb des Gelenkes. Die Führungsfläche ist so orientiert, dass der Hebel in Richtung zum zweiten Paneel gedrängt wird. Weil der Gelenkpunkt der Feder oberhalb dieses Berührungspunktes liegt, wird der Verriegelungsarm in die entgegensetzte Richtung verschwenkt, das heißt vom zweiten Paneel wegbewegt. Der Verriegelungsarm wird so weit verschwenkt, dass er hinter die Verriegelungskante des ersten Paneels fasst. Die Verriegelung ist damit abgeschlossen.

Eine solche Feder hat den Vorteil, dass an dem ersten Paneel lediglich eine Verriegelungskante ausgebildet werden muss, die als Hinterschneidung dient. Es ist nicht erforderlich, eine tiefe Nut auszubilden. Daher ist der Materialabtrag und Materialverlust zur Herstellung einer solchen mechanischen Verbindung sehr gering. Gleichzeitig ist die Feder besonders klein und platzsparend. Der Materialaufwand für die Feder ist gering. Zudem ist die Feder, die insbesondere materialeinheitlich einstückig aus einem Kunststoff hergestellt ist, im Spritzgußverfahren günstig in der Herstellung und ausgesprochen leicht zu montieren, da sie als Bandmaterial in die vorgefertigte Haltenut einsetzbar ist.

Ein weiterer Vorteil ist, dass zur Ausgestaltung der Führungsfläche keine besonderen Vorsprünge oder Erhebungen an dem ersten Paneel erforderlich sind. Die Führungsfläche ist geneigt, wobei ihr Normalenvektor in Richtung des zweiten Paneels weist. Die Richtung des Normalenvektors kann variieren. Das heißt, die Führungsfläche kann gewölbt sein, insbesondere konkav gewölbt sein. Der Bewegungsablauf des Hebels hängt allerdings auch von der Kontur des Hebels ab. Der Hebel kann zumindest abschnittsweise eine wellenförmige Kontur haben. Das freie Ende des Hebels kann gerundet sein, das heißt, eine konvexe Form haben, insbesondere in Anpassung an eine konkave Form der Führungsfläche. Dadurch ändert sich der Berührungspunkt bzw. die Berührungslinie zwischen der Führungsfläche und dem Hebel beim vertikalen Ablegen des zweiten Paneels fortwährend. Auf diese Weise kann die Bewegungsgeschwindigkeit des Hebels in Abhängigkeit von der Lage des zweiten Paneels zum ersten Paneel beeinflusst werden und damit auch die Verriegelungsgeschwindigkeit des Verriegelungsarms gesteuert werden.

Beispielsweise ist denkbar, dass der Verriegelungsarm frühzeitig außer Eingriff mit dem zweiten Paneel gebracht wird. Der Verriegelungsarm schwenkt beim Ablegen früh aus und stößt dann von einer Randseite her gegen die Verriegelungskante, ohne diese zu hintergreifen. Beim weiteren Ablegen würde sich aufgrund der geneigten Führungsfläche der Druck auf die Verriegelungskante und den Verriegelungsarm erhöhen. Der Kopf der Feder wird gewissermaßen auf Biegung beansprucht und im Rahmen der elastischen Materialeigenschaften der Feder vorgespannt. Erreicht das abzulegende zweite Paneel die gewünschte Montageposition, schnappt der Verriegelungsarm aufgrund der aufgebauten Materialeigenspannung schlagartig hinter die Verriegelungskante. Dieses Einschnappen kann als akustisch wahrnehmbare Rückmeldung eine Montagehilfe sein.

Zur Verriegelung wird der Kopf aus einer Ausgangsposition, in der der Kopf im Wesentlichen vertikal zur Verlegeebene steht, in eine im Winkel zur Vertikalen stehende Verriegelungspositionen verschwenkt. Damit der Verriegelungskörper zuverlässig in der Ausgangsposition verharrt und nicht z. B. unbeabsichtigt ausgelöst wird, ist das freie Ende des Verriegelungskörpers im nicht verriegelten Zustand vorzugsweise über Mittel zum form- und/oder kraftschlüssigen Verrasten an dem ersten Paneel lösbar gehalten. Es handelt sich hierbei z. B. um eine Klemmverbindung.

Der Verriegelungsarm kann so konstruiert sein, dass er beim Einsetzen der Feder in die Haltenut unter Vorspannung gegen das zweite Paneel gedrückt ist. Dann ist keine besondere Konturierung oder Oberflächengestaltung im Kontaktbereich zwischen Verriegelungsarm und ersten Paneel erforderlich. Aufrauhungen und/oder Konturierungen erhöhen das Verharrungsvermögen des Verriegelungsarms am zweiten Paneel. Alternativ oder zusätzlich können auch lösbare Klebeverbindungen dazu beitragen den Verriegelungsarm im nicht verriegelten Zustand an dem ersten Paneel zu halten. Geeignete Klebstoffe können sowohl auf den Verriegelungsarm als auch auf das zweite Paneel appliziert sein.

Als Mittel zum form- und/oder kraftschlüssigen Verrasten umfasst das zweite Paneel bevorzugt einen Vorsprung, der zur Unterseite des zweiten Paneels weist. Mit diesem Vorsprung kann das obere Ende des Verriegelungskörpers in Eingriff bringbar sein. Der Vorsprung ist eine im Wesentlichen in Horizontalrichtung wirkende Hinterschneidung. Der Vorsprung kann beispielsweise ein Wulst mit insbesondere gerundeten Flanken sein. Die gerundeten Flanken ermöglichen ein leichtes Abgleiten des oberen Endes des Verriegelungsarms an dem Vorsprung, so dass das Verbinden der Paneele ohne Überwindung größerer Widerstände möglich ist.

Das obere Ende des Verriegelungsarms besitzt mithin einen Bereich, insbesondere ebenfalls in Form eines Wulstes, der hinter den Vorsprung des Paneels fassen kann. Auch dieser Bereich ist insbesondere gerundet, um ein leichtes Abgleiten von dem Vorsprung am Paneel zu ermöglichen.

Zusätzlich kann am oberen Ende des Verriegelungsarms ein Rastvorsprung angeordnet sein, der dafür vorgesehen ist, mit einer Rastvertiefung in Eingriff gebracht zu werden, die benachbart der Verriegelungskante angeordnet ist. Die Rastvertiefung befindet sich an dem bereits verlegten ersten Paneel und dient zur Lagepositionierung des verschwenkbaren, freien Endes des Rastarms. Der Rastvorsprung ist vorzugsweise ebenfalls als Wulst ausgebildet. Er besitzt bevorzugt gerundete Flanken. Der Rastvorsprung fasst insbesondere in eine gegengleiche Rastvertiefung unterhalb der Verriegelungskante. Die Verriegelungskante ist die Kante des benachbarten Bauteils, die eine Hinterschneidung, insbesondere in Form einer zur Randseite eines Paneels offenen Nut, begrenzt. Die Verrieglungskante stellt die Grenze der Hinterschneidung dar. Für eine zuverlässige Verrastung muss der Rastarm zwar nicht vollständig, aber hinreichend weit hinter die Verriegelungskante verlagerbar sein. Hierzu grenzt an die Verriegelungskante eine Rastfläche für den Kontakt mit dem oberen Ende des Verriegelungsarms. Auf die Rastfläche kann im Abstand von der Verriegelungskante die Rastvertiefung folgen. Wenn sich die Rastvertiefung im Abstand von der Verriegelungskante befindet, muss ein Rastvorsprung am Verriegelungsarm zunächst die Verriegelungskante und die Rastfläche überstreichen, bevor er mit der Rastvertiefung in Eingriff gelangt. Denkbar ist aber auch, die Rastvertiefung unmittelbar angrenzend der Verriegelungskante anzuordnen und die Rastfläche im Anschluss an die Rastvertiefung. In diesem Fall kann der Rastvorsprung als letztes hinter die Verriegelungskante fassen. Gleichzeitig kann der Rastvorsprung dazu dienen, hinter den zur Unterseite weisenden Vorsprung am ersten Paneel zu fassen. Der Verriegelungsarm kann einen oder mehrere Rastvorsprünge haben.

An dem ersten Paneel kann ein Anschlag sein, der in der Verriegelungsstellung die Auslenkung des Verriegelungsarms in Richtung des ersten Paneels begrenzt. Der Anschlag kann ein nach unten weisender Vorsprung unterhalb der Verriegelungskante sein. Der Anschlag kann sich auch oberhalb der Verriegelungskante befinden. In diesem Fall greift der Verriegelungsarm nicht vollständig hinter die Verriegelungskante sondern nur teilweise. Ein Bereich des Verriegelungsarms liegt dann oberseitig der Verriegelungskante an dem ersten Paneel an und begrenzt die weitere Auslenkung des Verriegelungsarms.

Es wird als vorteilhaft angesehen, wenn der Kopf in der Verriegelungsstellung so weit verschwenkt ist, dass er unter Vorspannung an dem Anschlag anliegt. Die Vorspannung ergibt sich aus den elastischen Materialeigenschaften der Feder. Zusätzliche Elemente, die eine Federkraft aufbringen, sind nicht erforderlich, aber auch nicht ausgeschlossen. Die Vorspannung, unter welcher der Verriegelungsarm an dem Anschlag anliegt, führt dazu, dass entsprechend der Hebelverhältnisse Gegenkräfte an dem zweiten Paneel angreifen. Erfindungsgemäß ist vorgesehen, dass das Gelenk an einer Widerlagerkante des zweiten Paneels abgestützt ist. Die von dem Verriegelungsarm ausgehenden Kräfte werden dann in die Widerlagerkante des Paneels eingeleitet.

Das Gelenk kann als Bereich reduzierter Wanddicke ausgebildet sein. Das Gelenk ist so ausgebildet und angeordnet, dass es die zu erwartenden Kräfte, die vom ersten Paneel auf den Verriegelungsarm wirken, in die Widerlagerkante des zweiten Paneels übertragen kann.

Oberhalb der Widerlagerkante befinden sich der Fuß und/oder ein Verbindungsabschnitt zwischen dem Gelenk und dem Fuß. Dieser Verbindungsabschnitt kann sich vom Gelenk zum Fuß in der Dicke verbreitern, da der Fuß eine größere Dicke als das Gelenk haben kann.

Unterhalb der Widerlagerkante befindet sich der Hebel. Damit der Hebel weit genug in Richtung zum zweiten Paneel um die bzw. unter die Widerlagerkante geschwenkt werden kann, ist das Paneel von oben betrachtet unterhalb der Widerlagerkante hinterschnitten ausgebildet. Hier befindet sich insbesondere eine Anlagefläche für den Hebel, die in der Verriegelungsposition im Wesentlichen parallel zur Führungsfläche am ersten Paneel verläuft. Die Anlagefläche und die Führungsfläche sind in einem Abstand zueinander angeordnet, der im Wesentlichen der Dicke des Hebels entspricht.

In einer Weiterbildung der Erfindung ist an dem Verriegelungsarm ein Stützarm angeordnet. Der Stützarm ist zusammen mit dem Verriegelungsarm verschwenkbar. Der Stützarm ist zum zweiten Paneel hin orientiert. In der Ausgangsposition steht das freie Ende des Stützarms nicht mit dem zweiten Paneel in Kontakt, sondern nur in der Verriegelungsposition. Das freie Ende ist beim Verschwenken des Verriegelungsarms in Richtung zu einer Stützfläche am zweiten Paneel verschwenkbar, um sich in der Verriegelungsstellung an dieser Stützfläche abzustützen. Der Verriegelungsarm steht beispielsweise in einem Winkel von 90 +/- 20° zur Längsrichtung des Verriegelungsarms. In der Ausgangsstellung kann der Verriegelungsarm beispielsweise parallel zur Verlegeebene orientiert sein und in Richtung der Haltenut des Fußes weisen. Oberhalb der Haltenut des Fußes befindet sich in diesem Fall die Stützfläche. Der Stützarm nimmt insbesondere quer auf die Federverbindung wirkende Kräfte auf und überträgt diese in das benachbarte erste Paneel. Der Stützarm kann zudem unmittelbar angrenzend an das Gelenk angeordnet sein. Dadurch können Kräfte, die über die Verriegelungskante in den Verriegelungsarm eingeleitet werden und zu einer Verlagerung des ersten Paneels nach unten führen, nicht nur über den schwächeren Gelenkbereich, sondern über den angrenzenden Stützarm in die Widerlagerkante und damit in das zweite Paneel eingeleitet werden. Ein Stützarm, der nicht mit einer Stützfläche am zweiten Paneel in Kontakt kommt, sondern nur dem Gelenk eine zusätzliche Unterstützung gibt, kann auch als Stütznocken bezeichnet werden.

Es wird als besonders vorteilhaft angesehen, wenn die Führungsfläche Bestandteil einer nach oben offenen Kuppelnut zur Horizontalverbindung der Paneele ist. Eine solche Kuppelnut zur Horizontalverbindung ist bei der bevorzugten Ausgestaltung ohnehin vorgesehen. Die Führungsfläche für den Hebel ist dann eine Nutflanke dieser Kuppelnut. Diese Nutflanke wird für die Horizontalverrieglung nicht benötigt. Dies wird mit Hilfe der anderen Nutflanke der oben offenen Kuppelnut erreicht und in entgegensetzter Wirkrichtung durch den Kontakt der Randseiten an der Oberseite der Paneele.

Die Erfindung ermöglicht es, unterschiedliche Verbindungstechniken im Bereich der profilierten Randseiten zu kombinieren. Insbesondere können die nicht mit den besagten Federn versehenen Seiten eines Paneels mit einer Profilierung zur Vertikalverriegelung versehen sein, wobei die Profilierung eine feststehende Federzunge umfasst, die mit einer Verriegelungsnut unterhalb der Verriegelungskante in Eingriff bringbar ist. Die feststehende Federzunge fasst also in eine Verriegelungsnut, die optional oder zusätzlich vorgesehen sein kann und die zur Verbindung mit der erfindungsgemäßen mechanischen Verbindung nicht erforderlich ist. Die Erfindung setzt nur eine Verriegelungskante als Hinterschneidung voraus. Die Hinterschneidung kann eine vergleichsweise sehr geringe Tiefe haben, die grundsätzlich nicht größer sein muss als der Bereich, der von dem Verriegelungsarm eingenommen wird. Da der Verriegelungsarm aus einer vertikalen Position in eine abgewinkelte Position verschwenkt wird, nimmt die Tiefe der Nut unterhalb der Verriegelungskante zur Unterseite hin ab. Eine solche Nut ist im Querschnitt im Wesentlichen dreieckförmig konfiguriert. Dagegen ist es für den Eingriff von feststehenden Federzungen zweckmäßig, tiefere, im Wesentlich rechteckig konfigurierte Nuten vorzusehen. Die Tiefe und Kontur der Verriegelungsnuten ist an die Form der feststehenden Federzungen angepasst.

Bevorzugt liegt das zweite Paneel in der Verriegelungsposition auf einer Auflageleiste auf. Sie befindet sich zwischen der Oberseite des ersten Paneels und der Verriegelungskante. Die Verriegelungskante kann an der Unterseite der Auflagerleiste ausgebildet sein. Das zweite Paneel wird daher entweder durch den Druck des Verriegelungsarms gegen die Verriegelungskante oder bei einer feststehenden Zunge von der Federzunge an dem ersten Paneel gehalten. Die Auflagerleiste ist damit Teil der Vertikalverriegelung, wobei dieser Teil der Vertikalverriegelung ein zu weites Absenken des zweiten Paneels gegenüber dem ersten Paneel verhindert.

Die Paneele können rechteckig oder quadratisch ausgebildet sein. Typischerweise ist eine Kopfseite mit einer Feder ausgebildet und die gegenüberliegende Kopfseite mit einer dazu passenden Verriegelungskante. Es ist möglich, bei derartigen Paneelen über Eck benachbarte Seite mit den besagten Federn auszustatten. In diesem Fall sind die zwei anderen Seiten mit den dazu passenden Verriegelungskanten versehen. Dies ermöglicht bei quadratischen Paneelen eine größere Freiheit beim Verlegen.

Der Erfindungsgedanke ist für alle Boden-, Wand- und Deckensysteme anwendbar, insbesondere bei denen ein Oberbelag auf einen Träger, bei welchem es sich insbesondere um eine Holzwerkstoffplatte, wie z. B. eine MDF-, HDF- oder Spanplatte handelt, angeordnet ist, wie beispielsweise Echtholzbeläge, Laminat, Träger mit lackierten Oberflächen als Oberbelag, Linoleum, Kork auf Trägerplatten etc. Die Deckschicht kann insbesondere aus einem Dekorpapier mit Overlay bestehen, welches die Optik der Elemente bestimmt. Bei einem Fußbodenbelag kann es sich somit um einen Fertigparkettboden, einen Echtholzboden oder um einen Laminatfußboden handeln. Ebenso eignen sich Elemente aus massivem Material, wie z. B. Holzdielen, Holzelemente, gegossene oder gespritzte Formplatten aus Kunststoff, insbesondere PVC aus Formteilen oder Gipsplatten. Die Federn können auch bei Paneelen mit geringerer Dicke von 4 bis 8 mm verwendet werden. Die Paneele können unter anderem Paneele für PVC-Böden sein, z. B. Trägerplatten mit oberseitigen Belägen auf PVC-Basis. Die Paneele können auch Kunststoffplatten oder Platten auf Zementbasis sein. Die einzelnen Paneele können durch Fasern verstärkt sein.

Der erfindungsgemäße Belag ermöglicht bei entsprechenden Verriegelungsnuten Klickverbindungen, die sowohl durch Einschwenken (fold down) als auch durch ein senkrechtes Ablegen von oben hergestellt werden können. Gleichzeitig ist es möglich, die Verbindung durch horizontales Ineinanderschieben innerhalb der Verlegeebene bzw. Einschlagen innerhalb der Verlegeebene herzustellen. Der erfindungsgemäße Belag eignet sich für rechteckige und quadratische Paneele sowie für Designverlegungen, bei denen Kreuzfugen ausgebildet werden. Es ergibt sich eine wesentlich größere gestalterische Vielfalt für diese Art der sogenannten Klick-Paneele. Die Erfindung ist nicht darauf beschränkt, dass die Paneele rechteckig sind und insbesondere nicht darauf, dass die Paneele zweier benachbarter Reihen versetzt zueinander angeordnet sind.

Die Erfindung ermöglicht die Verwendung verschiedener mechanischer Verbindungsprinzipien. Insbesondere ist die Haltenut korrespondierend zur Verriegelungsnut ausgebildet. Dadurch ist im Austausch zu der erfindungsgemäß vorgesehenen Feder ein alternatives Federelement einsetzbar. Das Federelement kann materialeinheitlich einstückig an dem zweiten zu verlegenden Paneel ausgebildet sein oder als lösbar eingliederbare Feder, entweder in der Haltenut oder der gegenüberliegenden Verriegelungsnut vormontiert sein. Hierbei kann es sich um eine Side-Push-Feder handeln, bei denen die Verrieglung durch Verlagerung eines Federbestandteiles in Längsrichtung der Haltenut erfolgt (DE 10 2006 037 614). Die korrespondierenden Verriegelungs- und Haltenuten gestatten aber auch die Verwendung alternativer Verriegelungssysteme, bei denen die Feder zunächst im entriegelten Zustand aus einer der Nuten vorsteht und beim Ablegen des zum verbindenden Paneels zurückgedrückt wird, um anschließend wieder in die Ausgangsposition zurückzuspringen.

Die Federn können für Paneele mit Dicken von 4 - 20 mm und insbesondere für Quadrate eingesetzt werden.

Die Erfindung betrifft ferner ein Verfahren zur Herstellung von Verbindungsmitteln für eine mechanische Verbindung an einer Randseite seines Paneels gemäß den Merkmalen der Ansprüche 1 bis 17.

Das Verfahren sieht vor, ein Paneel bereitzustellen und im Bereich seiner Randseite zu bearbeiten. Die Randseite soll eine Horizontalverbindung und eine Vertikalverbindung an den Randseiten von Paneelen ermöglichen, zur Verbindung mit insbesondere identisch konfigurierten Paneelen.

Es wird in dem Randbereich des Paneels Material entfernt, um in den Randbereich eine Haltenut und im Abstand von der Haltenut eine Feder auszubilden. Das Entfernen von Material erfolgt insbesondere spanabhebend. Es kann in einem oder mehreren Schritten erfolgen. Vorzugsweise werden hierzu mehrere speziell profilierte Fräswerkzeuge verwendet, die sich relativ zum Paneel bewegen. Bevorzugt sind die Fräswerkzeuge stationär angeordnet und die Paneele werden im Durchlaufverfahren an den Fräswerkzeugen vorbeigeführt.

Bei der Erfindung ist vorgesehen, dass die Feder als Verbindungsmittel unmittelbar aus dem Randbereich des Paneels herausgearbeitet wird. Die Feder besteht daher aus demselben Werkstoff wie das Paneel. Das Paneel kann mehrschichtig aufgebaut sein. Das Herausarbeiten der Feder kann aus dem Kernmaterial des Paneels erfolgen. Das Kernmaterial ist bei der Erfindung nicht zwangsläufig HDF. Es kann ein Kunststoff oder ein Holz-Kunststoff-Verbundwerkstoff sein. Das Paneel hat an seiner Unterseite bevorzugt einen Gegenzug. Der Gegenzug besteht aus einem anderen Material als die Decklage an der Oberseite und/oder als das Kernmaterial des Paneels. Der Gegenzug kann aus einem Werkstoff bestehen, das eine höhere Dichte aufweist als der Rest des Paneels. Der Gegenzug besteht insbesondere aus einem Werkstoff mit höherer Steifigkeit als der Rest des Paneels. Die Feder kann zumindest teilweise aus dem Werkstoff des Gegenzuges bestehen. Insbesondere betrifft dies den der Haltenut abgewandten Teil der Feder.

Die Feder wird soweit profiliert, dass sie über eine Gelenkverbindung mit dem Paneel verbunden bleibt. Diese Gelenkverbindung kann unmittelbar an der Feder oder auch im Abstand von der Feder angeordnet sein, so dass die Feder um eine Schwenkachse der Gelenkverbindung verschwenkbar ist. Die Schwenkachse verläuft bevorzugt parallel zur Verlegeebene. Auf diese Weise wird die Feder im nächsten Schritt in die Haltenut geschwenkt. Erfindungsgemäß ist die Feder in der Haltenut gehalten und ist nun Bestandteil der Verbindungsmittel zur Verbindung mit einem benachbarten Paneel. Anschließend wird die Gelenkverbindung entfernt. Das heißt, dass die Feder nun nicht mehr materialeinheitlich einstückiger Bestandteil des Paneels ist. Die Feder und die Haltenut sind so aufeinander abgestimmt, dass die Feder nicht selbsttätig aus der Haltenut herausrutschen kann. Insbesondere ist die Feder klemmend in der Haltenut gehalten. Es ist nicht erforderlich, die Feder aus der Decklage des Paneels herzustellen. Vorzugsweise besteht die Feder aus dem Material der der Decklage abgewandten Seite. Dementsprechend kann auch die Gelenkverbindung zwischen der Feder und dem Paneel unterseitig des Paneels ausgebildet sein. Die Feder wird beim Schwenken in die Haltenut dadurch nach oben geschwenkt. Dabei kommt der ursprünglich als Gegenzug ausgebildete Teil des Paneels am Kopf der Feder in Funktion. Die höhere Steifigkeit des Kopfes oder eines Teils des Kopfes ist für die Funktion der Feder sehr hilfreich.

Das Entfernen der Gelenkverbindung erfolgt bevorzugt von der Unterseite des Paneels her. Beim Entfernen der Gelenkverbindung kann gleichzeitig eine Profilierung an der Unterseite des Paneels ausgebildet werden. Dadurch kann eine Horizontalverbindung geschaffen werden, die Bestandteil der Verbindungsmittel zur Verbindung zweier Paneele im Bereich ihrer Randseiten ist. Die Horizontalverbindung ist eine Hinterschneidung im Wesentlichen senkrecht zur Verlegeebene.

Zusätzlich kann vorgesehen sein, die Feder besser in der Haltenut zu fixieren, indem ein Fixiermittel an dem Paneel platziert wird, das zwischen Feder und Haltenut wirksam ist. Bei dem Fixiermittel handelt es sich insbesondere um ein Haftmittel, wie z. B. einen Klebstoff, der in die Haltenut eingebracht wird und/oder auf die Feder aufgebracht wird. Dieses Fixiermittel, insbesondere ein Kleber, verhindert ein unbeabsichtigtes Herausrutschen der Feder aus der Haltenut während der weiteren Bearbeitung, während des Transports und insbesondere während der materialabhebenden Bearbeitung beim Entfernen der Gelenkverbindung.

Die Erfindung wird nachfolgend anhand von in den Zeichnungen schematisch dargestellten Ausführungsbeispielen näher erläutert. Es zeigen:
- Figur 1: einen Vertikalschnitt durch den Randbereich zweier miteinander in Eingriff stehender Paneele;
- Figur 2: einen Vertikalschnitt durch den Randbereich zweier miteinander in Eingriff stehender Paneele in einer weiteren Ausführungsform;
- Figur 3a bis f: Vertikalschnitte durch den Randbereich zweier miteinander in Eingriff stehender Paneele gemäß der Ausführungsform der Figur 1 in unterschiedlichen Phasen der Verriegelung;
- Figur 4 bis 7: Vertikalschnitte durch den Randbereich zweier miteinander in Eingriff stehender Paneele in unterschiedlichen Ausführungsformen;
- Figuren 8 und 9: einen Vertikalschnitt durch den Randbereich zweier miteinander in Eingriff stehender Paneele entlang einer Feder in zwei unterschiedlichen Positionen;
- Figur 10: einen Vertikalschnitt durch den Randbereich zweier miteinander in Eingriff stehender Paneele gemäß einer weiteren Ausführungsform mit einer Feder gemäß der Figuren 8 und 9;
- Figuren 11 und 12: einen Vertikalschnitt durch den Randbereich zweier miteinander in Eingriff stehender Paneele in einer weiteren Ausführungsform mit Auflagerleiste;
- Figuren 13 und 14: einen Vertikalschnitt durch den Randbereich zweier miteinander in Eingriff stehender Paneele gemäß einer weiteren Ausführungsform ohne Auflagerleiste;
- Figur 14a: in vergrößerter Darstellung eine alternative Ausführungsform eines Fußes der Feder und
- Figuren 15a bis h: im Vertikalschnitt durch den Randbereich eine zeitliche Abfolge von Fertigungsschritten zur Herstellung von Verbindungsmitteln an einer Randseite eines Paneels.

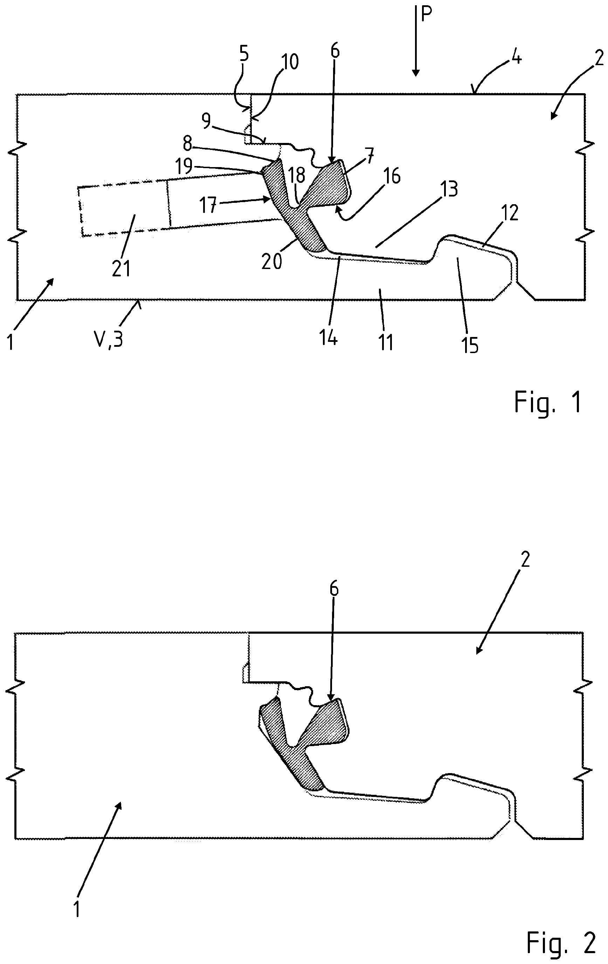

Figur 1 zeigt einen Querschnitt durch den Verbindungsbereich zweier Paneele 1, 2. Die Paneele 1, 2 sind so konfiguriert, dass sie zu einem Belag, insbesondere einem Fußbodenbelag, zusammengesetzt werden können. Die Paneele 1, 2 besitzen eine dem Paneeluntergrund zugewandte Unterseite 3 sowie eine Oberseite 4, die der Sichtseite entspricht. Die Unterseite 3 und die Oberseite 4 verlaufen parallel zu einer Verlegeebene V.

Das zweite Paneel 2 weist an der zum ersten Paneel 1 weisenden Seite 5 eine Feder 6 in einer Haltenut 7 auf. Die Feder 6 ist dafür vorgesehen, hinter eine Verriegelungskante 8 an dem ersten Paneel 1 zu fassen. Die Verriegelungskante 8 befindet sich unterhalb einer Auflagerleiste 9, die als Vorsprung an der Seite 10 des ersten Paneels 1 ausgebildet ist. Die Auflagerleiste 9 verläuft bei diesem Ausführungsbeispiel oberseitig parallel zur Verlegeebene V. An der Randseite 5 des zweiten Paneels 2 ist ein entsprechender Rücksprung ausgebildet, so dass das zweite Paneel 2 nahe seiner Oberseite 4 senkrecht zur Verlegeebene V an dem ersten Paneel 1 abgestützt ist.

Das erste Paneel 1 weist eine Verriegelungsleiste 11 auf. Die Verriegelungsleiste 11 des ersten Paneels 1 steht gegenüber der Seite 10 des ersten Paneels 1 am weitesten vor. Das zweite Paneel 2 besitzt einen nach unten offene Kuppelkanal 12 und einen sich hieran anschließenden, nach unten gerichteten Kuppelwulst 13. Das zweite Paneel 2 wird so gegenüber dem ersten Paneel 1 angeordnet, dass beim Absenken in Richtung des Pfeils P der Kuppelwulst 13 des zweiten Paneels 2 mit einem nach oben offenen Kuppelkanal 14 der Verriegelungsleiste 11 und der Kuppelkanal 12 des zweiten Paneels 2 mit einem Kuppelwulst 15 der Verriegelungsleiste 11 in Eingriff gelangt. Dieser Bereich der Paneele 1, 2 dient zur horizontalen Verbindung der Paneele 1, 2.

Das Ablegen in Richtung des Pfeils P kann dadurch erfolgen, dass die Oberseite 4 des zweiten Paneels 2 parallel zur Verlegeebene V verlagert wird. Das zweite Paneel 2 kann alternativ durch Verschwenken um eine nicht andere Randseite gegenüber dem ersten Paneel 1 abgewinkelt werden.

Der Kuppelwulst 15 an der Verriegelungsleiste 11 des ersten Paneels 1 sowie der nach unten vorstehende Kuppelwulst 13 an dem zweiten Paneel 2 besitzen jeweils eine schräg gestellte Oberseite bzw. Unterseite, so dass auch beim Zusammenschieben der Paneele 1, 2 in Richtung der Verlegeebene V, das heißt beim horizontalen Zusammenschieben, der Kuppelwulst 13 des zweiten Paneels 2 auf dem Kuppelwulst 15 des zuerst verlegten ersten Paneels 1 abgleitet. Dabei wird das zweite Paneel 2 angehoben, bis die beiden Paneele 1, 2 über den höchsten Punkt des Kuppelwulstes 15 der Verriegelungsleiste geführt sind. Dann rutscht das zweite Paneel 2 selbsttätig in den nach oben offenen Kuppelkanal 14 an der Verriegelungsleiste und nimmt die in Figur 1 dargestellte Position ein. Die Paneele 1, 2 können daher nicht nur durch senkrechtes Ablegen oder Einwinkeln miteinander verbunden werden, sondern auch durch horizontales Ineinanderschieben in Richtung der Verlegeebene V.

Wesentlicher Bestandteil der Verbindung zwischen den beiden Paneelen 1, 2 ist die Feder 6 sowie das Zusammenspiel der Profilierungen im Bereich der Randseiten 5, 10 der Paneele 1, 2. Die Feder 6 besteht aus Kunststoff. Sie ist elastisch verformbar. Die Feder besitzt einen Fuß 16 und einen Kopf 17. Der Fuß 16 ist derjenige Teil, der in der Halternut 7 sitzt und die Feder 6 an dem zweiten Paneel 2 hält. Der Kopf 17 ist derjenige Bereich, der sich außerhalb der Haltenut 7 befindet. In der Schnittdarstellung hat die Feder 6 einen im Wesentlichen Y-förmigen Querschnitt, wobei der in der Bildebene rechte Arm mit dem Fuß 16 in der Breite zum Fuß in zunimmt.

Der Verbindungsbereich zwischen Fuß 16 und Kopf 17 dient als Gelenk 18. Die gelenkigen Eigenschaften entstehen durch die Reduzierung der Wanddicke der Feder 6 in diesem Bereich. Die Feder 6 besteht materialeinheitlich einstückig aus Kunststoff. Es handelt sich bei der Feder um ein langgestrecktes Profil mit gleichbleibendem Querschnitt. Ein solches Profil kann kostengünstig im Strangpressverfahren hergestellt sein und als Meter- oder auch Rollenware passend zur Länge der Randseiten der Paneele 1, 2 abgelängt sein.

Der Fuß 16 ist der feststehende Teil der Feder 6. Die an das Gelenk 18 anschließenden Teile der Feder 6 sind schwenkbeweglich um das Gelenk 18 gelagert. Ein in der Bildebene oberer Bereich des Kopfes 17 dient als Verriegelungsarm 19. Der Verriegelungsarm 19 befindet sich oberhalb des Gelenks 18. Unterhalb des Gelenks 18 befindet sich ein weiterer Arm des Kopfes 17. Er dient als Hebel 20. Ein Verschwenken des Hebels 20 führt aufgrund der Lage des Gelenks 18 zwischen dem Hebel 20 und dem Verriegelungsarm 19 zu einem gleichsinnigen Verschwenken des Verriegelungsarms 19 um das Gelenk 18. Das Gelenk 18 führt also nicht zu einer Schwenkbeweglichkeit zwischen Verriegelungsarm 19 und Hebel 20, sondern nur zu einer verbesserten Verschwenkbarkeit des Kopfes 17 gegenüber dem Fuß 16.

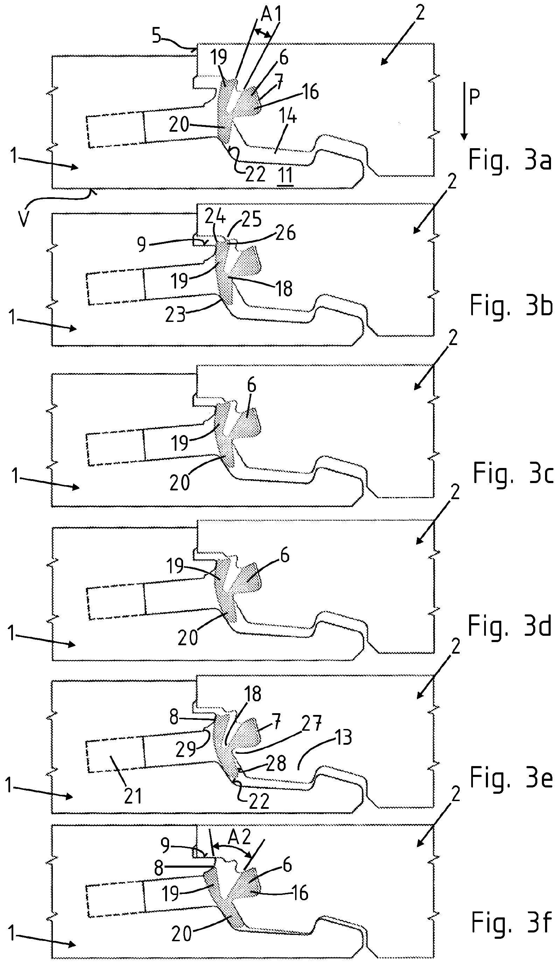

Der Kopf 17 wird zum Verriegeln nur sehr geringfügig ausgelenkt (Figur 3). Der Verriegelungsarm 19 muss zur Verriegelung lediglich hinter die Verriegelungskante 8 fassen. Es ist daher nicht erforderlich, bei Verwendung dieser Feder 6 besonders tiefe Verriegelungsnuten am ersten Paneel 1 auszubilden. Dennoch kann eine solche Nut 21 am ersten Paneel 1 ausgebildet sein. Bei diesem Ausführungsbeispiel ist die Nut 21 dazu geeignet alternative Federn aufzunehmen, die aus der Nut 21 in die Haltenut 7 des gegenüberliegenden Paneels 2 verlagerbar sind. Umgekehrt ist es möglich, an dem zweiten Paneel 2 eine andere Feder anzuordnen, welche in die Nut 21 des ersten Paneels 1 fasst. Prinzipiell ist die Nut für den hier beschriebenen Typ der Feder 6 nicht erforderlich.

Figur 2 zeigt ein Ausführungsbeispiel, bei welchem ein anderes erstes Paneel 1 mit dem vorstehend zu Figur 1 beschriebenen zweiten Paneel 2 sowie unter Verwendung der vorstehend beschriebenen Feder 6 verriegelt worden ist. Der einzige Unterschied besteht darin, dass es bei dem ersten Paneel 1 keine Nut 21 unterhalb der Verriegelungskante 8 gibt.

Nachfolgend werden weitere Ausführungsbeispiele von möglichen Paarungen von Paneelen 1, 2 sowie Federn 6 beschrieben, wobei für im Wesentlichen gleichbleibende Bauteile einheitliche Bezugszeichen verwendet werden.

Das Prinzip der mechanischen Verbindung der Paneele 1, 2 wie sie in Figur 1 dargestellt sind, lässt sich am besten anhand der Darstellung der Figur 3 erkennen. Das zweite Paneel 2 wird von oben in Richtung des Pfeils P gegenüber dem ersten Paneel 1 abgelegt. Figur 3a zeigt dabei den ersten Kontakt des Hebels 20 mit dem ersten Paneel 1. Der Hebel 20 weist im Wesentlichen senkrecht nach unten und berührt eine Führungsfläche 22 am ersten Paneel 1. Die Führungsfläche 22 ist gegenüber der Verlegeebene V geneigt und weist zur Haltenut 7. Die Führungsfläche 22 ist Bestandteil der nach oben offenen Kuppelnut 14 an der Verriegelungsleiste 11 des ersten Paneels 1 (Figur 1). Die Feder 6 ist in der dargestellten Position vollständig hinter der Randseite 5 des zweiten Paneels 2 angeordnet. Sie kommt ausschließlich über den Hebel 20, nicht jedoch über den Verriegelungsarm 19 mit dem ersten Paneel 1 in Kontakt. Der Verriegelungsarm 19 weist senkrecht nach oben. Der Hebel 20 weist senkrecht nach unten. Beim weiteren Absenken des zweiten Paneels 2 gleitet ein unteres, freies Ende 23 des Hebels 20 (Figur 3b) an der geneigten Führungsfläche 22 ab. Dadurch wird der Hebel 20 um das Gelenk 18 verschwenkt. Ein gelenkseitiges Ende des Hebels 20 ist mit dem gelenkseitigen Ende des Verriegelungsarms 19 verbunden, so dass das andere, freie Ende 24 sich entgegengesetzt zum freien Ende 23 des Hebels verlagert. Das bedeutet, dass das freie Ende 24 des Verriegelungsarms 19 vom zweiten Paneel 2 weg bewegt wird, während das freie Ende 23 des Hebels 20 zum zweiten Paneel 2 hin bewegt wird.

Die Figuren 3a und 3b zeigen, dass der Verriegelungsarm 19 in seiner Ausgangsposition in Kontakt mit dem zweiten Paneel 2 steht. Hierzu sind zwischen dem freien Ende 24 des Verriegelungsarms 19 und zur Unterseite der Paneele 1, 2 hin orientiert Mittel zum form- und/oder kraftschlüssigen Verrasten angeordnet. Diese Mittel bewirken eine lösbare Fixierung des Verriegelungsarms 19 im Bereich seines freien, oberen Endes. Bei diesem Ausführungsbeispiel handelt es sich um einen Vorsprung 25 am zweiten Paneel 2. Der Vorsprung 25 weist nach unten. An dem freien oberen Ende 24 des Verriegelungsarms 19 ist ein Rastvorsprung 26 ausgebildet, der in die Ausgangsposition hinter den nach unten ragenden Vorsprung 25 am zweiten Paneel 2 fasst. Es handelt sich um eine formschlüssige Verrastung des Kopfes 17 am zweiten Paneel 2.

Figur 3b zeigt, dass nach Aufhebung dieser Verrastung der Verriegelungsarm 19 zunächst randseitig gegen die Auflagerleiste 9 gedrängt wird. In Figur 3b ist das zweite Paneel 2 noch ein wenig weiter abgesenkt. Der Hebel 20 ist weiter in Richtung zum zweiten Paneel 2 verlagert. Dadurch krümmt sich der Kopf 17 im Übergangsbereich zwischen Hebel 20 und Verriegelungsarm 19. Diese Krümmung setzt sich fort, so lange der Verrriegelungsarm 19 nicht weiter in Richtung zum ersten Paneel 1 verlagert werden kann, aber gleichsam der Hebel 20 weiter vom ersten Paneel 1 weiter in Richtung zum zweiten Paneel 2 verlagert wird (Figuren 3d und e). Gleichzeitig wird durch die Krümmung des Kopfes 17 eine Kraft auf das Paneel 2 ausgeübt, die im Bereich des Gelenks 18 auf eine Widerlagerkante 27 des zweiten Paneels 2 übertragen wird. Die Widerlagerkante 27 ist gerundet. Oberhalb der Widerlagerkante 27 befindet sich die Haltenut 7. Unterhalb der Widerlagerkante 27 ist das zweite Paneel 2 von oben betrachtet hinterschnitten. Es handelt sich um eine Flanke 28 des Kuppelwulstes 13, die im Wesentlichen parallel zur Führungsfläche 22 verläuft und zur Aufnahme des Hebels 20 zwischen dem ersten und dem zweiten Paneel 1, 2 dient.

Figur 3f zeigt schließlich das zweite Paneel 2 in der vollständig abgesenkten Position. Während der Hebel 20 beim weiteren Absenken von Figur 3e zu 3f nur eine relativ geringe Schwenkbewegung erfährt, wird das freie Ende 24 des Verriegelungsarms 19 in dieser Phase des Absenkens viel stärker verschwenkt. Das freie Ende 24 schnappt hinter die Verriegelungskante 8 an der Auflagerleiste 9. Dadurch wird der Kopf 17 der Feder 6 insgesamt wieder in die gestreckte Form gebracht und zumindest teilweise entspannt. Der Verriegelungsarm 19 hat wieder dieselbe relative Lage zum Hebel 20, wie in der Ausgangsposition in Figur 3a. Der Verriegelungsarm 19 kann allerdings mit einer gewissen Vorspannung gegen einen Anschlag 29 (Figur 3e) gedrückt sein, der sich unterhalb der Verriegelungskante 8 befindet. Der Anschlag 29 begrenzt die Schwenkbeweglichkeit des Verriegelungsarms 19. Der Anschlag 29 befindet sich oberhalb der Verriegelungsnut 21. Figur 3f entspricht der Darstellung der Figur 1.

In Figur 3a ist ein Winkel A1 zwischen dem Verriegelungsarm 19 und dem Fuß 16 eingezeichnet. Der Winklel A1 wird bis auf den Winkel A2 vergrößert, wie er in Figur 3f eingezeichnet ist. Allgemein gilt, dass der Winkel A2 bei der Erfindung größer ist als der Winkel A1. Insbesondere ist der Winkel A2 größer gleich 1,3 x A1.

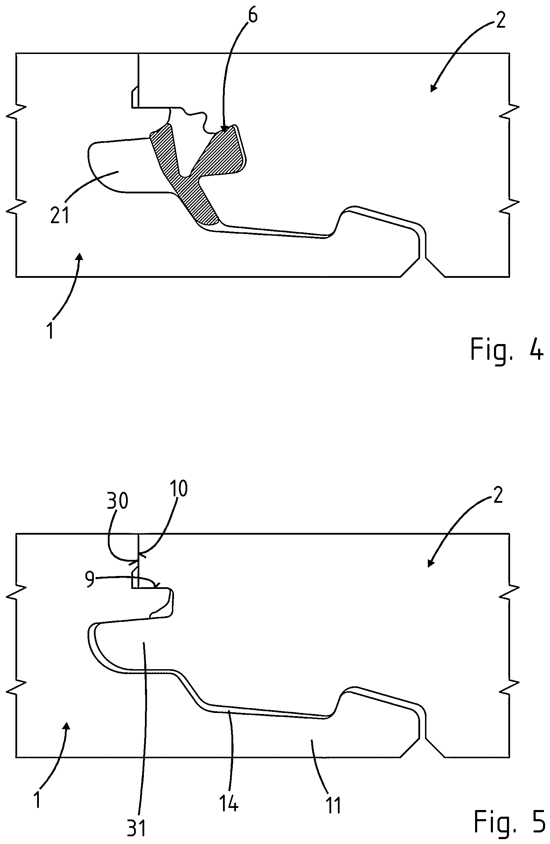

Das Ausführungsbeispiel unterscheidet sich von demjenigen der Figur 1 durch eine andersartig gestaltete Nut 21. Die Feder 6 und das Wirkprinzip der vertikalen Verriegelung sind identisch zu demjenigen der Figuren 1 bis 3. Die Nut 21 dient zwar nicht zur Aufnahme der Feder 6, allerdings ermöglicht die Nut 21 die Kombination des ersten Paneels 1 mit anderen Randseiten bzw. Paneelen 2. Das zweite Paneel 2 ist in diesem Ausführungsbeispiel über eine andere Randseite 30 mit der Randseite 10 des ersten Paneels 1 verbunden. Die in den Figuren 1 bis 4 dargestellte Randseite mit der beweglichen Feder 6 kann beispielsweise die Kopfseite eines Paneels 2 sein. Die in Figur 5 dargestellte Randseite 30 kann demgegenüber die Längsseite oder eine andere rechtwinklig zur Kopfseite stehende Randseite sein. Es ist an dieser Randseite 30 keine Haltenut mit einer beweglichen Feder 6 ausgebildet, sondern eine feststehende Federzunge 31, die geeignet ist, im Zusammenspiel mit der Auflagerleiste 9 eine Vertikalverbindung herzustellen und über Eingriff in den Kuppelkanal 14 der Verriegelungsleiste 11 am ersten Paneel 1 eine Horizontalverbindung herzustellen. Die Figuren 4 und 5 zeigen, dass die randseitige Profilierung im ersten Paneel 1 geeignet ist, mit verschiedenartigen Federn 6, 31 in Eingriff zu gelangen, was die Variabilität dieser Paneele 1, 2 verbessert.

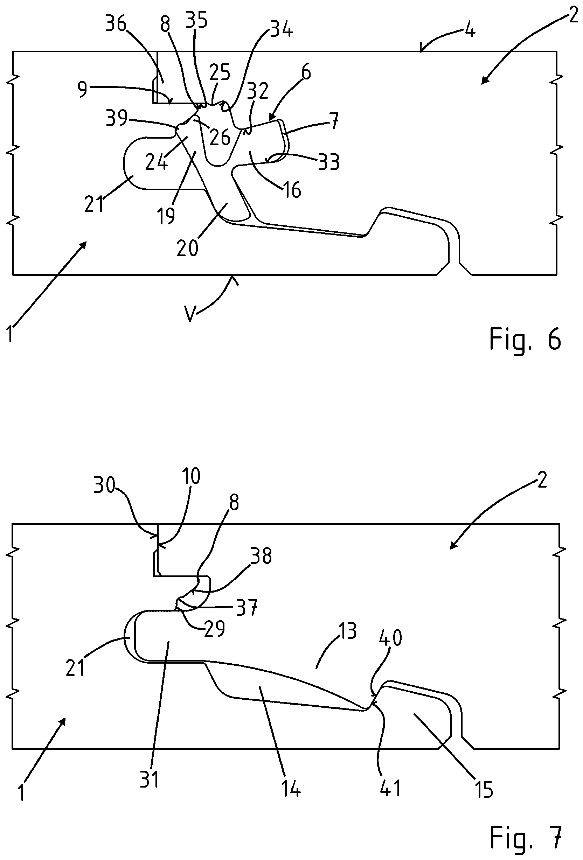

Das Ausführungsbeispiel der Figuren 6 und 7 zeigt in gleicher Weise wie die Gegenüberstellung der Figuren 4 und 5 ein erstes Paneel 1 mit einer Nut 21, deren Nutflanken horizontal, das heißt parallel zur Verlegeebene V, verlaufen. Bei dem vorherigen Ausführungsbeispiel waren die Nutflanken zwar ebenfalls parallel zueinander, sie verliefen jedoch leicht geneigt zur Verlegeebene V. Das Tiefste der Nut 21 liegt näher an der Unterseite 3 als die Mündung der Nut 21.

Genauso wie bei den vorherigen Ausführungsbeispielen ist die Feder 6 der Figur 6 im Wesentlichen Y-förmig konfiguriert. Ihr Fuß 16 ist etwas größer ausgebildet, da auch die Haltenut 7 eine etwas längere obere Nutflanke besitzt. Bei allen Ausführungsformen ist die obere Nutflanke 32 der Haltenut 7 kürzer als die gegenüberliegende untere Nutflanke 33. Die obere und die untere Nutflanken 31, 33 können im Winkel zueinander verlaufen, so dass sich die Haltenut 7 mündungsseitig verengt. Dies verhindert ein Herausrutschen des Fußes 16 aus der Haltenut 7. Figur 6 zeigt ferner, dass der Vorsprung 25, über welchen der Verriegelungsarm 19 mit seinem oberen Ende 24 formschlüssig an dem zweiten Paneel 2 gehalten werden soll, benachbart einer Vertiefung 34 ausgebildet ist. Die Vertiefung 34 befindet sich zwischen der Mündung der Haltenut 7 und dem nach unten gerichteten Vorsprung 25. In die Vertiefung kann der Rastvorsprung 26 am Verriegelungsarm 19 fassen, um den Verriegelungsarm 19 am zweiten Paneel 2 zu halten. Die Vertiefung 34 ist in einer Unterseite 35 der Stützleiste 36 des zweiten Paneels 2 ausgebildet. Die Stützleiste 36 liegt mit ihrer parallel zur Verlegeebene V verlaufenden Unterseite 35 auf der Auflagerleiste 9 auf. Die Stützleiste 36 und die Auflagerleiste 9 definieren die Höhenlage des zweiten Paneels 2 gegenüber dem ersten Paneel 1. Die Unterseite 35 ist das Bezugsniveau für die gegenüber der Unterseite 35 zurücktretende Vertiefung 34 und für den gegenüber der Unterseite 35 vorstehenden Vorsprung 25. Im Unterschied zu den vorangegangenen Ausführungsformen der zweiten Paneelen 2 ist die Vertiefung 34 damit näher an der Oberseite 4 des Paneels 1, 2 angeordnet.

Anhand der Figur 7 ist zu erkennen, dass bei dem ersten Paneel 1, das identisch zu Figur 6 ist, eine Rastvertiefung 37 im Abstand von der Verriegelungskante 8 angeordnet ist. Zwischen der rillenförmigen Rastvertiefung 37 und der Verriegelungskante 8 befindet sich eine Rastfläche 38. In die Rastvertiefung 37 greift ein Rastvorsprung 39 (Figur 6). Das obere Ende 24 des Verriegelungsarms 19 besitzt mithin zwei Rastvorsprünge 26, 39 und zwischen den Rastvorsprüngen 26, 39 eine Vertiefung. Das obere Ende 24 ist auf seiner Oberseite daher gewissermaßen gewellt. In der Verriegelungsposition, wie sie in Figur 6 gezeigt ist, stützt sich der Verriegelungsarm 19 über die beiden Rastvorsprünge 26, 39 unterhalb der Verriegelungskante 8 von unten an der Auflagerleiste 9 ab. Die Rastfläche 38 ist zur Verlegeebene V geneigt. Die Neigung ist so gewählt, dass bei einem Verschwenken des Verriegelungsarms 19 dessen freies Ende möglichst flächig an dem ersten Paneel 1 anliegt. Die Rastfläche 38 ist ca. um 40 bis 60° zur Vertikalebene V geneigt und der Haltenut 7 zugewandt.

In Figur 7 ist die Rastfläche 38 und die Rastvertiefung 37 sowie der sich an die Rastvertiefung 37 anschließende Anschlag 29 nur zur besseren Verdeutlichung erläutert. Bei Verwendung eines zweiten Paneels 2 mit einer feststehenden Federzunge 31 (Figur 7) ist die Verriegelungskante 8 mit der Rastfläche 38 und der Rastvertiefung 37 ohne Funktion. Die feststehende Federzunge 31 fasst tief in die Haltenut 21 ein. Funktional betrachtet liegt die Verriegelungskante 8 in Bezug auf die Federzunge 31 am Ende der oberen Nutflanke der Nut 21.

Ein weiterer Unterschied gegenüber der Ausführungsform der Figur 5 ist, dass der Kuppelwulst 13 des zweiten Paneels 2 nicht vollständig der Konturgebung des Kuppelkanals 14 im ersten Paneel folgt, sondern im Wesentlichen dreieckförmig konfiguriert ist, um sich an dem nach oben ragenden Kuppelwulst 15 des ersten Paneels abzustützen. Die Kontaktflächen 40, 41 zwischen den beiden Kuppelwulsten 13, 15 sind gegenüber einer Vertikalen zur Verlegeebene V geneigt. Der untere Kuppelwulst 14 ist dadurch gewissermaßen V-förmig erweitert. Die Schrägstellung der Kontaktflächen 40, 41 bewirkt, dass das zweite Paneel 2 beim Ablegen in Richtung des ersten Paneels 1 verlagert wird. Dadurch werden die Randseiten 10, 30 der beiden Paneele 1, 2 dicht aneinandergepresst. Diese Horizontalverriegelung kann nur durch Ausschwenken des zweiten Paneels 2 gegenüber dem erstem Paneel 1 gelöst werden.

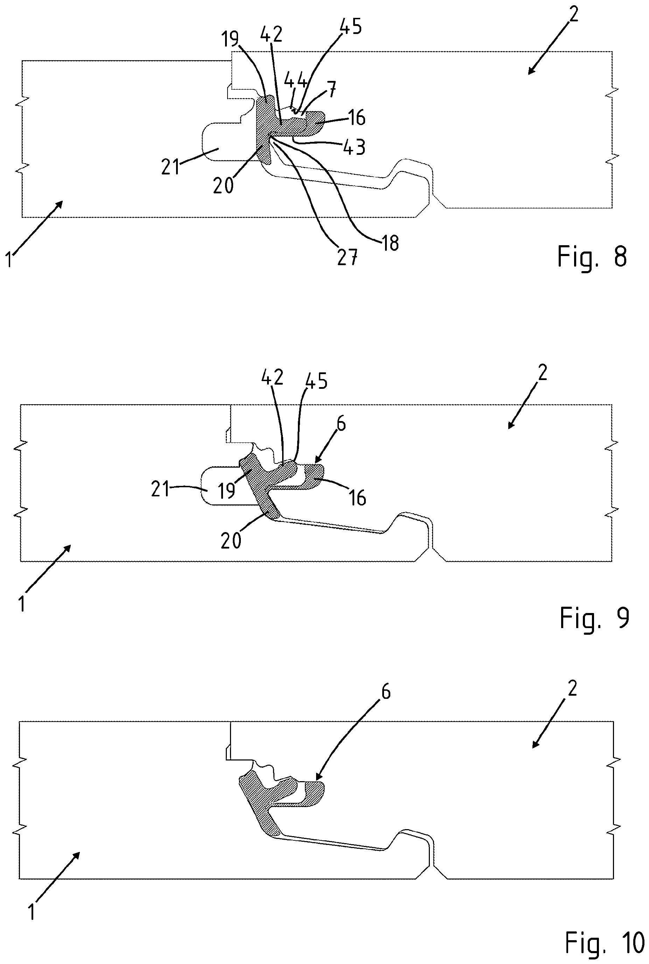

Das Ausführungsbeispiel der Figuren 8 und 10 zeigt eine etwas anders gestaltete Feder 6. Zusätzlich zu dem Fuß 16, dem Hebel 20 und dem Verriegelungsarm 19 ist ein Stützarm 42 an dem Verriegelungsarm 19 angeordnet. Der Stützarm 42 steht bei diesem Ausführungsbeispiel senkrecht zum Verriegelungsarm 19 und weist zum Fuß 16. Der Hebel 20 und der Verriegelungsarm 19 sind in der entriegelten Position exakt vertikal angeordnet, so dass der Kopf mit dem Stützarm 42 insgesamt T-förmig konfiguriert ist. Der Fuß 16 ist über einen Verbindungsabschnitt 43, der im Bereich der unteren Nutwand der Haltennut 7 verläuft, mit dem Fuß 16 verbunden. Das Gelenk 18 befindet sich wiederum in Anlage zur Widerlagerkante 27 des zweiten Paneels 2. Oberhalb des Stützarms 42 befindet sich benachbart zur Haltenut 7 eine Vertiefung 44 mit einer Stützfläche 45. die Stützfläche 45 ist dafür vorgesehen, beim Verschwenken des Verriegelungsarms 19 mit dem freien Ende des Stützarms 42 in Kontakt zu kommen. Die Stützfläche 45 ist gegenüber der Verlegeebene V geneigt. Ihr Normalenvektor weist in Richtung des ersten Paneels 1 nach schräg unten. Über den Stützarm 42 in Kombination mit der Stützfläche 45 können Kräfte auf den Kopf der Feder 6 übertragen werden. Zusätzlich wird die Feder 6 weiter ausgesteift. Figur 9 zeigt die Feder 6 in der Verriegelungsposition mit dem Stützarm 42 in Eingriff mit der Stützfläche 45.

Figur 10 zeigt dieselbe Feder wie in den Figuren 8 und 9 und auch das exakt dasselbe zweite Paneel 2. Der Unterschied gegenüber den Figuren 8 und 9 ist, dass keine Nut 21 vorhanden ist, in die eine feststehende Federzunge eingesetzt werden könnte, wie sie z. B. in Figur 7 gezeigt ist.

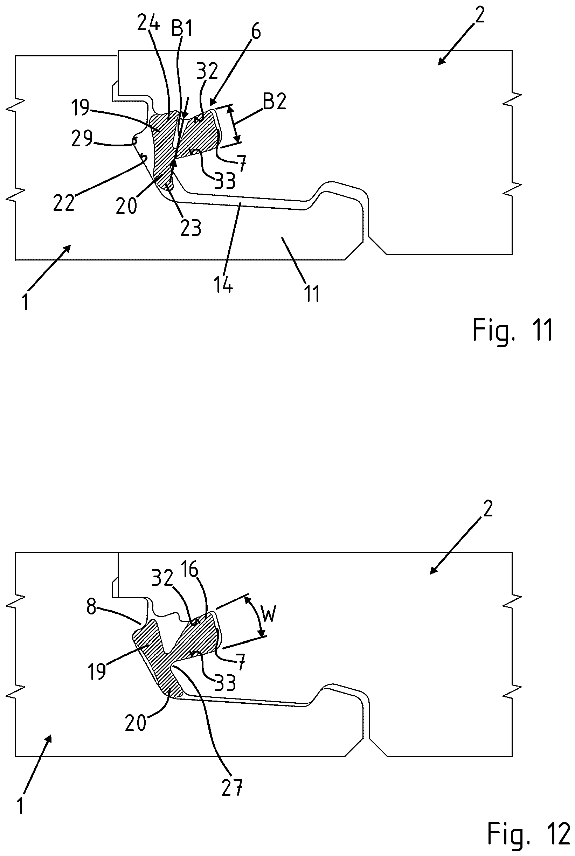

Das Ausführungsbeispiel der Figuren 11 und 12 zeigt eine weitere Ausführungsform einer Feder 6 in 2 Positionen. Anhand der Figur 12 ist zu erkennen, dass die Feder 6 mit ihrem Verriegelungsarm 19 nur teilweise hinter die Verriegelungskante 8 greift. Dennoch ist eine sichere Verriegelung gegeben, da der Hebel 20 nicht selbsttätig aus der ausgelenkten Position zurückschwenken kann. Hierzu müsste das zweite Paneel 2 angehoben werden. Das ist allerdings nicht möglich, solange der Verriegelungsarm 19 nicht wieder in Richtung zum Fuß 16 verschwenkt werden kann. Aufgrund der starren Verbindung zwischen Hebel 20 und Verriegelungsarm 19 ist das Zurückschwenken blockiert. Die Verbindung ist selbsthemmend.

Die Figuren 11 und 12 verdeutlichen ferner, dass es möglich ist, ausgesprochen kompakte Bauformen zu realisieren. Der Hebel 20 ist bezogen auf die vertikal zur Verlegeebene V gemessene Höhe des Kopfes kürzer als der Verriegelungsarm 19. Der Verriegelungsarm 19 liegt mit seinem freien Ende 24 in der Verriegelungsposition an einem Anschlag 29 an (Figur 11). Dieser Anschlag 29 ist allerdings keine gesondert ausgearbeitete Vertiefung, sondern lediglich als Fortsetzung der Führungsfläche 22 ausgebildet. Die Führungsfläche 22 selbst kann wiederum die Nutwange des nach oben offenen Kuppelkanals 14 an der Verriegelungsleiste 11 sein. Die randseitige Profilierung des ersten Paneels 1 ist dadurch besonders einfach in der Herstellung.

Der Hebel 20 besitzt bei diesem Ausführungsbeispiel sowie bei allen weiteren Ausführungsbeispielen einen gerundeten Bereich an seinem freien Ende 23. Dieser gerundete Bereich kommt mit der Führungsfläche 22 in Kontakt. Über den Grad der Rundung wird die Bewegung des Hebels 20 und damit des Verriegelungsarms 19 gesteuert. Die Rundung ist konvex und insbesondere frei von Sprüngen, so dass sich ein sanfter und kontinuierlicher Bewegungslauf des Verriegelungsarms 19 ergibt.

Abbildung 11 zeigt ferner, dass der Fuß 16 in einer Nut 7 gehalten ist, die sich zu ihrer Nutmündung verjüngt. Der Fuß 16 kann daher nicht selbsttätig aus der Nut 7 herausrutschen. Figur 12 zeigt, dass die obere Nutflanke 32 und die untere Nutflanke 33 in einem Winkel W zueinander angeordnet sind. Der Abstand der Nutflanken 32, 33 nimmt zur Mündung hin ab.

Figur 11 zeigt, dass der senkrecht zur unteren Nutflanke 33 gemessene Abstand B2 zur oberen Nutflanke 32 am Nutgrund am größten ist. Andererseits ist die untere Nutflanke 33 länger als die obere Nutflanke 32. Der Abstand B1 zwischen den Endpunkten der Nutflanken 32, 33 wird daher in einem von 90° abweichenden Winkel gegenüber der unteren Nutflanke 33 gemessen. Der Abstand B1 ist dabei größer als der Abstand B2. Das ermöglicht es, den Fuß 16 der Feder 6 bei der werkseitigen Montage leicht in die Nut 7 einzubringen. Figur 12 zeigt, wie die Feder 6 eine sichere Höhenfixierung der Paneele 1, 2 durch Diagonalversteifung zwischen der Verriegelungskante 8 und dem Widerlager 27 bewirkt. Die Feder 6 ist im Hinblick auf den Kopf 17 vorzugsweise in keiner Position gespannt. Lediglich das Gelenk 18 zwischen dem Kopf 17 und dem Fuß 16 ist ausgelenkt.

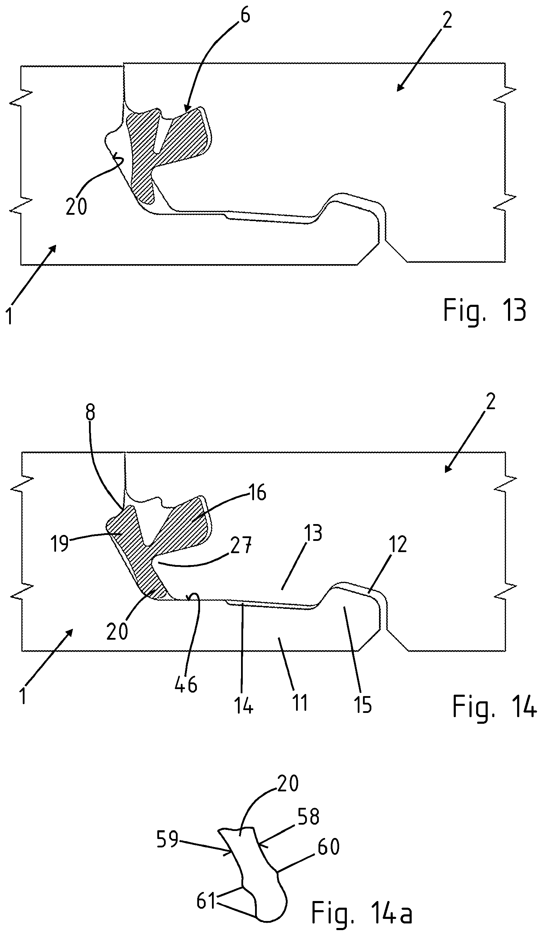

Das Ausführungsbeispiel der Figuren 13 und 14 unterscheidet sich von allen vorhergehenden dadurch, dass keine Auflagerleiste 9 vorhanden ist. Im Übrigen entspricht die hier verwendete Feder der Bauform wie sie in den Figuren 11 und 12 gezeigt ist. Auch bei dieser Variante fasst die Feder 6 nicht vollständig hinter die Verriegelungskante 8. Die Verriegelungskante 8 befindet sich mangels Auflagerleiste im Übergang zu einer hinterschnittenen Tasche, die oberseitig von der Verriegelungskante 8 begrenzt ist. Die Tasche ist im Querschnitt dreieckförmig und geht genau wie bei dem Ausführungsbeispiel der Figuren 11 und 12 in die Führungsfläche 22 für den Hebel 20 über.

Ein weiterer Unterschied ist, dass der nach oben offene Kuppelkanal 14 nun eine Auflagerfläche 46 besitzt, auf welcher das zweite Paneel 2 über seinen nach unten ragenden Kuppelwulst 13 abgestützt ist.

Bei allen Ausführungsbeispielen ist der Kopf der Feder 7 in der Verriegelungsposition schräg gestellt und steht gewissermaßen diagonal zur Verlegeebene V. Eine Kraft, die von oben auf das erste Paneel 1 ausgeübt wird, wird über die Verriegelungskante 8 bzw. die sich daran anschließenden Bereiche im ersten Paneel 1 auf den Verriegelungsarm 19 und von dort über die Widerlagerkante 27 in das zweite Paneel 2 übertragen. Bei dem Ausführungsbeispiel der Figur 14 wird deutlich, dass der oberhalb der Widerlagerkante 27 angeordnete, fest verankerte Haltefuß 16 das zweite Paneel 2 mit nach unten ziehen würde, so dass die Vertikalverbindung gewährleistet ist. Bei Druck von oben auf das zweite Paneel 2 wird die Kraft über die Auflagerfläche 46 an der Verriegelungsleiste 11 in das erste Paneel 1 eingeleitet, so dass auch hier kein Höhenversatz zwischen den Paneelen 1, 2 entsteht. Die Horizontalverbindung wird wie bei allen anderen Ausführungsbeispielen über den gegenseitigen Eingriff von Kuppelwulsten 13, 15 und Kuppelkanälen 12, 14 erreicht.

Figur 14a zeigt eine alternative Ausführungsform eines Hebels 20, der an seiner Vorderseite 59 und/oder seiner Rückseite 58 mindestens einen Vorsprung 60, 61 aufweist. Bevorzugt ist der Hebel 20 wellenförmig gestaltet, wobei eine Wellenkontur auf der Vorder- und/oder Rückseite 58, 59 ausgebildet ist.

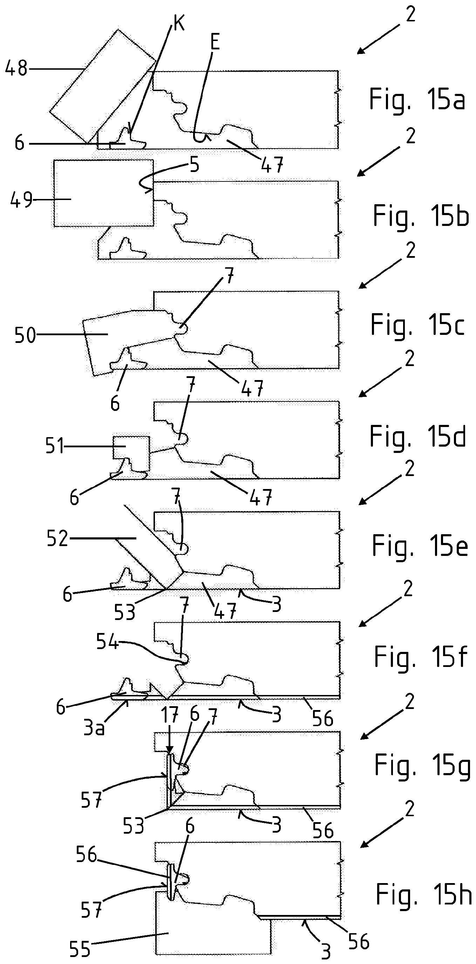

Die Figuren 15a bis h zeigen eine Abfolge von Fertigungsschritten zur Herstellung von Verbindungsmitteln an einer Randseite 5 eines Paneels 2. Das dargestellte Paneel 2 ist in einem Randbereich 47 noch nicht profiliert. Die Endkontur E ist allerdings schon eingezeichnet. Ebenso ist die Kontur K einer Feder 6 zu erkennen. Nachfolgend wird erläutert, wie der Randbereich 47 bearbeitet wird. In den Figuren 15a bis e werden zeitlich nacheinander fünf unterschiedliche Fräswerkzeuge 48 - 52 eingesetzt, um die Endkontur E aus dem Vollmaterial des Randbereiches 47 herauszufräsen. In Figur 15a wird gezeigt, dass durch das Fräswerkzeug 48 zunächst eine Fase ausgebildet wird. Im nächsten Schritt (Figur 15b) wird die Randseite 5 herausgebildet

In Figur 15c wird gezeigt, wie mittels des Fräswerkzeugs 50 die Haltenut 7 und auch ein Teil der Profilierung der Feder 6 herausgearbeitet wird. Zunächst wird die in der Bildebene linke Hälfte der Feder 6 von dem Fräswerkzeug 50 konturgebend bearbeitet. Im nächsten Schritt (Figur 15d) wird die gegenüberliegende Seite der Feder 6 von einem entsprechend konturiertem Fräswerkzeug 51 bearbeitet.

Schließlich wird in Figur 15e gezeigt, wie der Randbereich 47 mit einem Fräswerkzeug 52 bearbeitet wird, wobei der Randbereich 47 an einer Unterseite 3 so weit ausgedünnt wird, dass eine Gelenkverbindung 53 entsteht. Die Gelenkverbindung 53 befindet sich zwischen der Feder 6 und dem zuvor profilierten Bereich der Haltenut 7, das heißt im Abstand von der Feder 6 und im Abstand von der Haltenut 7. Der Abstand ist so gewählt, dass die Feder 6 in die Haltenut 7 verschwenkbar ist.

Zuvor wird jedoch ein Fixiermittel 54 in Form eines Klebstoffes in die Haltenut 7 appliziert (Figur 15f).

Anschließend wird die Feder 6 um 90° nach oben verschwenkt, so dass die Feder 6 in die Haltenut 7 fasst (Figur 15g). Die Feder ist nun über das Fixiermittel 54 in Form des Klebers und noch über die Gelenkverbindung 53 mit dem Paneel 2 verbunden.

In nächsten Schritt wird über ein weiteres Fräswerkzeug 55 die Gelenkverbindung 53 entfernt (Figur 15h). Die Verbindung zur Feder 6 wird entfernt und gleichzeitig wird an der Unterseite 3 des Paneels 2 eine Profilierung zur Horizontalverbindung mit einem weiteren Paneel ausgebildet. Die Randseite des Paneels ist nun vollständig profiliert und kann mit einem dazu passenden, weiteren Paneel verbunden werden. Insbesondere handelt es sich dabei um eine mechanische Verbindung, wie sie in den Figuren 1 bis 14 dargestellt ist.

Figur 15f zeigt, dass das Paneel 2 an seiner Unterseite 3 einen Gegenzug 56 besitzt. Der Gegenzug 56 besteht aus einem steiferen Material als der Rest des Paneels 2. Auch die Unterseite 3a der Feder 6 besteht aus dem Gegenzug 56. Beim Verschwenken nach oben (Figur 15g) wird die Unterseite 3a der Feder 6 zu einer seitlichen Flanke 57 am Kopf 17 der Feder 6. Diese Flanke 57 mit dem steifen Gegenzug 56 steift den Kopf 17 der Feder 6 aus.

### Bezugszeichen:

- 1 -: Paneel
- 2 -: Paneel
- 3 -: Unterseite
- 3a -: Unterseite
- 4 -: Oberseite
- 5 -: Randseite
- 6 -: Feder
- 7 -: Haltenut
- 8 -: Verriegelungskante
- 9 -: Auflagerleiste
- 10 -: Randseite
- 11 -: Verriegelungsleiste
- 12 -: Kuppelkanal
- 13 -: Kuppelwulst
- 14 -: Kuppelkanal
- 15 -: Kuppelwulst
- 16 -: Fuß
- 17 -: Kopf
- 18 -: Gelenk
- 19 -: Verriegelungsarm
- 20 -: Hebel
- 21 -: Nut
- 22 -: Führungsfläche
- 23 -: freies Ende von 20
- 24 -: freies Ende von 19
- 25 -: Vorsprung an 2
- 26 -: Rastvorsprung
- 27 -: Widerlagerkante
- 28 -: Flanke
- 29 -: Anschlag
- 30 -: Randseite
- 31 -: Federzunge
- 32 -: obere Nutflanke von 7
- 33 -: untere Nutflanke von 7
- 34 -: Vertiefung
- 35 -: Unterseite
- 36 -: Stützleiste
- 37 -: Rastvertiefung
- 38 -: Rastfläche
- 39 -: Rastvorsprung
- 40 -: Kontaktfläche
- 41 -: Kontaktfläche zu 41
- 42 -: Stützarm
- 43 -: Verbindungsabschnitt
- 44 -: Vertiefung
- 45 -: Stützfläche
- 46 -: Auflagerfläche
- 47 -: Randbereich
- 48 -: Fräswerkzeug
- 49 -: Fräswerkzeug
- 50 -: Fräswerkzeug
- 51 -: Fräswerkzeug
- 52 -: Fräswerkzeug
- 53 -: Gelenkverbindung
- 54 -: Fixiermittel
- 55 -: Fräswerkzeug
- 56 -: Gegenzug
- 57 -: Flanke
- 58 -: Rückseite
- 59 -: Vorderseite
- 60 -: Vorsprung
- 61 -: Vorsprung
- A1 -: Winkel
- A2 -: Winkel
- B1 -: Abstand
- B2 -: Abstand
- E -: Endkontur
- K -: Kontur
- P -: Pfeil
- V -: Verlegeebene
- W -: Winkel

## Patentansprüche

1. Mechanische Verbindung für Paneele mit folgenden Merkmalen:
a. Die Paneele (1, 2) besitzen eine Horizontalverbindung und eine Vertikalverbindung an ihren miteinander zu verbindenden Randseiten (5, 10, 30), wobei das zuerst zu verlegende erste Paneel (1) das anschließend zu verlegende, zweite Paneel (2) zur Horizontalverriegelung untergreift und wobei zur Vertikalverriegelung an dem ersten Paneel (1) eine Verriegelungskante (8) und an dem zweiten Paneel (2) eine Feder (6) angeordnet, die hinter die Verriegelungskante (8) verlagerbar ist;
b. Die Feder (6) besitzt einen in einer Haltenut (7) angeordneten Fuß (16) und zumindest teilweise aus der Haltenut (7) ragenden Kopf (17), der gelenkig mit dem Fuß (16) verbunden ist, **dadurch gekennzeichnet, dass** der Kopf (17) einen zur Oberseite (4) des zweiten Paneels (2) weisenden Verriegelungsarm (19) zum Verschwenken hinter die Verriegelungskante (8) und einen zur Unterseite (3) des zweiten Paneels (2) weisenden Hebel (20) zum Verschwenken des Verriegelungsarms (19) besitzt, wobei der Kopf (17) in einem Bereich zwischen Verriegelungsarm (19) und Hebel (20) mit dem Fuß (16) verbunden ist und wobei ein freies unteres Ende (23) des Hebels (20) vor dem Ablegen des zweiten Paneels (2) im Abstand vom zweiten Paneel (2) ist und ein freies, oberes Ende (24) des Verriegelungsarms (19) in Kontakt mit dem zweiten Paneel (2) ist;
c. und dass das erste Paneel (1) eine Führungsfläche (22) besitzt, mit welcher der Hebel (20) beim Ablegen in Eingriff bringbar ist, um den Hebel (20) in Richtung zum zweiten Paneel (2) um das Gelenk (18) zu verschwenken und mittels des Hebels (20) das obere Ende (23) des Verriegelungsarms (19) weg vom zweiten Paneel (2) hinter die Verriegelungskante (8) zu verlagern.

2. Mechanische Verbindung nach Anspruch 1, **dadurch gekennzeichnet, dass** das freie Ende (24) des Verriegelungsarms (19) im nicht verriegelten Zustand über Mittel zum form- und/oder kraftschlüssigen Verrasten an dem zweiten Paneel (2) lösbar gehalten ist.

3. Mechanische Verbindung nach Anspruch 1 oder 2, **dadurch gekennzeichnet, dass** der Verriegelungsarm (19) im nicht verriegelten Zustand über eine lösbare Klebeverbindung am ersten Paneel (1) gehalten ist.

4. Mechanische Verbindung nach Anspruch 2, **dadurch gekennzeichnet, dass** die Mittel zum form- und oder kraftschlüssigen Verrasten einen zur Unterseite (3) des zweiten Paneels (2) weisenden Vorsprung (25) umfassen, mit welchem das obere Ende (24) des Verriegelungsarms (19) in Eingriff bringbar ist.

5. Mechanische Verbindung nach einem der Ansprüche 1 bis 4, **dadurch gekennzeichnet, dass** am oberen Ende (24) des Verriegelungsarms (19) ein Rastvorsprung (39) angeordnet ist, welcher mit einer Rastvertiefung (37) in Eingriff bringbar ist, die benachbart der Verriegelungskante (8) angeordnet ist.

6. Mechanische Verbindung nach Anspruch 5, **dadurch gekennzeichnet, dass** an dem ersten Paneel (1) zwischen der Verriegelungskante (8) und der Rastvertiefung (37) eine zur Verlegeebene (V) geneigte Rastfläche (38) für den Eingriff mit dem Verriegelungsarm (19) angeordnet ist.

7. Mechanische Verbindung nach einem der Ansprüche 1 bis 6, **dadurch gekennzeichnet, dass** an dem ersten Paneel (1) ein Anschlag (29) angeordnet ist, der in der Verriegelungsstellung die Auslenkung des Verriegelungsarms (19) in Richtung des ersten Paneels (1) begrenzt.

8. Mechanische Verbindung nach Anspruch 7, **dadurch gekennzeichnet, dass** der Kopf (17) in der Verriegelungsstellung so weit verschwenkt ist, dass er unter Vorspannung an dem Anschlag (29) anliegt.

9. Mechanische Verbindung nach einem der Ansprüche 1 bis 8, **dadurch gekennzeichnet, dass** das Gelenk (18) an einer Widerlagerkante (27) des zweiten Paneels (2) abgestützt ist.

10. Mechanische Verbindung nach Anspruch 9, **dadurch gekennzeichnet, dass** eine vom ersten Paneel (1) von oben auf den Verriegelungsarm (19) wirkende Kraft über das Gelenk (18) in die Widerlagerkante (27) in das zweite Paneel (2) übertragbar ist.

11. Mechanische Verbindung nach einem der Patentansprüche 1 bis 10, **dadurch gekennzeichnet, dass** an dem Verriegelungsarm (19) ein Stützarm (42) angeordnet ist, der zusammen mit dem Verriegelungsarm (19) verschwenkbar ist und wobei ein freies Ende des Stützarms (42) beim Verschwenken des Verriegelungsarms in Richtung zu einer Stützfläche (45) am zweiten Paneel (2) verschwenkbar ist, um sich in der Verriegelungsstellung an der Stützfläche (45) abzustützen.

12. Mechanische Verbindung nach einem der Ansprüche 1 bis 11, **dadurch gekennzeichnet, dass** die Führungsfläche (22) Bestandteil einer nach oben offenen Kuppelnut (14) zur Horizontalverbindung der Paneele (1, 2) ist.

13. Mechanische Verbindung nach einem der Ansprüche 1 bis 12, **dadurch gekennzeichnet, dass** nicht mit den besagten Federn (6) versehene Randseiten (30) eines Paneels (1, 2) mit einer Profilierung zur Vertikalverriegelung versehen sind, die eine feststehende Federzunge (31) umfasst, die mit einer Nut (21) unterhalb der Verriegelungskante (8) in Eingriff bringbar ist.

14. Mechanische Verbindung nach einem der Ansprüche 1 bis 13, **dadurch gekennzeichnet, dass** das zweite Paneel (2) in der Verriegelungsposition auf einer Auflagerleiste (9) zwischen der Oberseite (4) des ersten Paneels (1) und der Verriegelungsleiste (11) aufliegt, wobei das zweite Paneel (2) entweder durch den Druck des Verriegelungsarms (19) gegen die Verriegelungskante (8) oder bei einer feststehenden Federzunge (31) gemäß Anspruch 11 von der Federzunge (31) an dem ersten Paneel (1) gehalten ist.

15. Mechanische Verbindung nach einem der Ansprüche 1 bis 14, **dadurch gekennzeichnet, dass** eine Verriegelungsbewegung des Verriegelungsarms (19) zwischen einer Ausgangsstellung und einer Verriegelungsstellung unidirektional ist und ausschließlich von dem zweiten Paneel (2) hin zum ersten Paneel (1) gerichtet ist.

16. Mechanische Verbindung nach einem der Ansprüche 1 bis 15, **dadurch gekennzeichnet, dass** der Verriegelungsarm (19) in der Ausgangsposition in einem ersten Winkel (A1) größer 0° zum Fuß (16) angeordnet ist und in der Verriegelungsposition in einem zweiten Winkel (A2) zum Fuß (16) angeordnet ist, wobei der zweite Winkel (A2) um mindestens 30° größer ist als der erste Winkel (A1).

17. Mechanische Verbindung nach einem der Ansprüche 1 bis 16, **dadurch gekennzeichnet, dass** der Hebel (20) zumindest abschnittsweise eine wellenförmige Kontur aufweist.

18. Verfahren zur Herstellung von Verbindungsmitteln für eine mechanische Verbindung an einer Randseite (5) eines Paneels mit den Merkmalen nach einem der Ansprüche 1 bis 17, wobei die Verbindungsmittel zur Verbindung mit einem benachbarten Paneel vorgesehen sind mit folgenden Schritten:
- Bereitstellen eines Paneels (2);
- Von einem Randbereich (47) des Paneels (2) wird Material entfernt, um in dem Randbereich (47) eine Haltenut (7) und im Abstand von der Haltenut (7) eine Feder (6) auszubilden;
- Es wird eine Gelenkverbindung (53) zwischen der Feder (6) und dem Paneel (2) ausgebildet;
- Die Feder (6) wird in die Haltenut (7) geschwenkt;
- Die Feder (6) ist in der Haltenut (7) gehalten und ist nun Bestandteil der Verbindungsmittel zur Verbindung mit einem benachbarten Paneel, wobei die Feder (6) und die Haltenut (7) so aufeinander abgestimmt sind, dass die Feder (6) nicht selbsttätig aus der Haltenut (7) herausrutschen kann;
- Die Gelenkverbindung (53) wird entfernt.

19. Verfahren nach Anspruch 18, **dadurch gekennzeichnet, dass** die Feder (6) zumindest teilweise aus einem Gegenzug (56) an der Unterseite (3) des Paneels (2) hergestellt wird.

20. Verfahren nach Anspruch 18 oder 19, **dadurch gekennzeichnet, dass** vor dem Verschwenken der Feder (6) in die Haltenut (7) ein zwischen Feder (6) und Haltenut (7) wirksames Fixiermittel (54) an dem Paneel (2) platziert wird.

21. Verfahren nach einem der Ansprüche 18 bis 20, **dadurch gekennzeichnet, dass** beim Entfernen der Gelenkverbindung (53) eine Profilierung zur Horizontalverbindung mit einem weiteren Paneel (1) unterseitig des zweiten Paneels (2) ausgebildet wird.

## Claims

1. Mechanical connection for panels having the following characteristics:
a) The panels (1, 2) have a horizontal connection and a vertical connection at their edge sides (5, 10, 30) to be connected with one another, wherein the panel (1) to be laid first engages below the second panel (2) to be laid subsequently for the horizonal locking, and wherein for the vertical locking is disposed on the first panel (1) a locking edge (8) and on the second panel (2) a tongue (6), which can be displaced behind the locking edge (8);
b) The tongue (6) has a foot (16) disposed in a holding groove (7) and a head (17) protruding at least partially out of the holding groove (7), which head is connected in articulated manner with the foot (16),
**characterised in that**
the head (17) has a locking arm (19), pointing to the top side (4) of the second panel (2), for pivoting behind the locking edge (8) and a lever (20), pointing to the bottom side (3) of the second panel (2), for pivoting the locking arm (19), wherein the head (17) is connected with the foot (16) in a region between locking arm (19) and lever (20) and wherein a free lower end (23) of the lever (20) prior to the laying of the second panel (2) is at a distance from the second panel (2) and a free upper end (24) of the locking arm (19) is in contact with the second panel (2);
c) and **in that** the first panel (1) has a guiding surface (22), with which the lever (20) can be brought into engagement when laying, in order to pivot the lever (20) in the direction of the second panel (2) about the joint (18) and by means of the lever (20) to displace the upper end (23) of the locking arm (19) away from the second panel (2) behind the locking edge (8).

2. Mechanical connection according to claim 1, **characterised in that** the free end (24) of the locking arm (19) in unlocked state is releasably held on the second panel (2) by means of means for form-fitting and/or force-fitting latching.

3. Mechanical connection according to claim 1 or 2, **characterised in that** the locking arm (19) in unlocked state is held on the first panel (1) by means of a releasable adhesive connection.

4. Mechanical connection according to claim 2, **characterised in that** the means for the force-fitting and or form-fitting latching include a projection (25) pointing to the bottom side (3) of the second panel (2), with which projection the upper end (24) of the locking arm (19) can be brought into engagement.

5. Mechanical connection according to any of claims 1 to 4, **characterised in that** on the upper end (24) of the locking arm (19) is disposed a snap-in projection (39) which can be brought into engagement with a snap-in depression (37) which is disposed adjacent to the locking edge (8).

6. Mechanical connection according to claim 5, **characterised in that** on the first panel (1) between the locking edge (8) and the snap-in depression (37) is disposed a snap-in surface (38), inclined to the laying plane (V), for the engagement with the locking arm (19).

7. Mechanical connection according to any of claims 1 to 6, **characterised in that** on the first panel (1) is disposed an abutment (29), which in the locking position delimits the displacement of the locking arm (19) in the direction of the first panel (1).

8. Mechanical connection according to claim 7, **characterised in that** the head (17) in the locking position is pivoted so far that it bears on the abutment (29) in a preloaded manner.

9. Mechanical connection according to any of claims 1 to 8, **characterised in that** the joint (18) is supported on an abutment edge (27) of the second panel (2).

10. Mechanical connection according to claim 9, **characterised in that** a force, acting from the first panel (1) from above onto the locking arm (19) can be transferred via the joint (18) into the abutment edge (27) into the second panel (2).

11. Mechanical connection according to any of claims 1 to 10, **characterised in that** on the locking arm (19) is disposed a support arm (42) which can be pivoted together with the locking arm (19), and wherein a free end of the support arm (42) when pivoting the locking arm can be pivoted in the direction of a support surface (45) on the second panel (2) in order to brace itself in the locking position on the support surface (45).

12. Mechanical connection according to any of claims 1 to 11, **characterised in that** the guiding surface (22) is a component of a coupling groove (14), open upwards, for the horizontal connection of the panels (1, 2).

13. Mechanical connection according to any of claims 1 to 12, **characterised in that** edge sides (30) of a panel (1, 2) not equipped with the said tongues (6) are equipped with a profiling for the vertical locking, which includes a fixed flexible tongue (31) which can be brought into engagement with a groove (21) below the locking edge (8).

14. Mechanical connection according to any of claims 1 to 13, **characterised in that** the second panel (2) in the locking position bears on a support bar (9) between the top side (4) of the first panel (1) and the locking bar (11), wherein the second panel (2) is held either by means of the pressure of the locking arm (19) against the locking edge (8) or, in the case of a fixed flexible tongue (31) according to claim 11, by the flexible tongue (31) on the first panel (1).

15. Mechanical connection according to any of claims 1 to 14, **characterised in that** a locking movement of the locking arm (19) between a start position and a locking position is unidirectional and is oriented exclusively from the second panel (2) to the first panel (1).

16. Mechanical connection according to any of claims 1 to 15, **characterised in that** the locking arm (19) in the start position is disposed at a first angle (A1) greater than 0° to the foot (16) and in the locking position is disposed at a second angle (A2) to the foot (16), wherein the second angle (A2) is at least 30° greater than the first angle (A1).

17. Mechanical connection according to any of claims 1 to 16, **characterised in that** the lever (20) has at least sectionally a wave-like contour.

18. Method for producing connecting means for a mechanical connection at an edge side (5) of a panel having the characteristics according to any of claims 1 to 17, wherein the connecting means for connecting with an adjacent panel are provided having the following steps:
- provision of a panel (2);
- from an edge region (47) of the panel (2), material is removed in order to form in the edge region (47) a holding groove (7) and, spaced from the holding groove (7), a tongue (6);
- an articulated connection (53) is formed between the tongue (6) and the panel (2);
- the tongue (6) is pivoted into the holding groove (7);
- the tongue (6) is held in the holding groove (7) and is now a component of the connecting means for connecting with an adjacent panel, wherein the tongue (6) and the holding groove (7) are synchronised such that the tongue (6) cannot spontaneously slip out of the holding groove (7);
- the articulated connection (53) is removed.

19. Method according to claim 18, **characterised in that** the tongue (6) is produced at least partially from a stabilising layer (56) on the bottom side (3) of the panel (2).

20. Method according to claim 18 or 19, **characterised in that** prior to the pivoting of the tongue (6) into the holding groove (7) a fixing means (54) effective between tongue (6) and holding groove (7) is placed on the panel (2).

21. Method according to any of claims 18 to 20, **characterised in that** when removing the articulated connection (53) a profiling is formed for the horizontal connection with a further panel (1) on the bottom side of the second panel (2).

## Revendications

1. Assemblage mécanique pour panneaux avec les caractéristiques suivantes :
a. les panneaux (1, 2) ont un assemblage horizontal et un assemblage vertical au niveau de leurs bords (5, 10, 30) à assembler, dans lequel, pour le verrouillage horizontal, le premier panneau (1) à poser en premier saisit par le dessous le deuxième panneau (2) à poser ensuite et, pour le verrouillage vertical, une arête de verrouillage (8) est agencée au niveau du premier panneau (1) et une languette (6) au niveau du deuxième panneau (2), laquelle languette peut être déplacée derrière l'arête de verrouillage (8) ;
b. la languette (6) a un pied (16) agencé dans une rainure de maintien (7) et une tête (17) dépassant au moins en partie hors de la rainure de maintien (7), laquelle tête est assemblée de manière articulée au pied (16), **caractérisé en ce que** la tête (17) a un bras de verrouillage (19) dirigé vers la face supérieure (4) du deuxième panneau (2) et destiné à pivoter derrière l'arête de verrouillage (8) et un levier (20) dirigé vers la face inférieure (3) du deuxième panneau (2) et destiné à faire pivoter le bras de verrouillage (19), dans lequel la tête (17) est assemblée au pied (16) dans une zone entre le bras de verrouillage (19) et le levier (20) et dans lequel une extrémité inférieure libre (23) du levier (20) est à une certaine distance du deuxième panneau (2) avant la pose du deuxième panneau (2) et une extrémité supérieure libre (24) du bras de verrouillage (19) est en contact avec le deuxième panneau (2) ;
c. et **en ce que** le premier panneau (1) a une surface de guidage (22) avec laquelle le levier (20) peut être amené en prise lors de la pose afin de faire pivoter le levier (20) autour de l'articulation (18) en direction du deuxième panneau (2) et, au moyen du levier (20), l'extrémité supérieure (23) du bras de verrouillage (19) peut être éloignée du deuxième panneau (2) derrière l'arête de verrouillage (8).

2. Assemblage mécanique selon la revendication 1, **caractérisé en ce que** l'extrémité libre (24) du bras de verrouillage (19) à l'état non verrouillé est maintenue amovible par l'intermédiaire de moyens destinés au blocage par concordance de forme et en force au niveau du deuxième panneau (2).

3. Assemblage mécanique selon la revendication 1 ou 2, **caractérisé en ce que** le bras de verrouillage (19) à l'état non verrouillé est maintenu par l'intermédiaire d'un assemblage adhésif amovible au niveau du premier panneau (1).

4. Assemblage mécanique selon la revendication 2, **caractérisé en ce que** les moyens destinés au blocage par concordance de forme et en force comprennent une partie en saillie (25) qui est dirigée vers la face inférieure (3) du deuxième panneau (2) et avec laquelle l'extrémité supérieure (24) du bras de verrouillage (19) peut être mise en prise.

5. Assemblage mécanique selon l'une quelconque des revendications 1 à 4, **caractérisé en ce qu'**il est agencé au niveau de l'extrémité supérieure (24) du bras de verrouillage (19) une partie en saillie de blocage (39) qui peut être mise en prise avec une encoche de blocage (37) qui est agencée au voisinage de l'arête de verrouillage (8).

6. Assemblage mécanique selon la revendication 5, **caractérisé en ce qu'**une surface de blocage (38) inclinée par rapport au plan de pose (V) en vue de la mise en prise avec le bras de verrouillage (19) est agencée au niveau du premier panneau (1) entre l'arête de verrouillage (8) et l'encoche de blocage (37).

7. Assemblage mécanique selon l'une quelconque des revendications 1 à 6, **caractérisé en ce qu'**il est agencé au niveau du premier panneau (1) une butée (29) qui, dans la position de verrouillage, limite le déploiement du bras de verrouillage (19) en direction du premier panneau (1).

8. Assemblage mécanique selon la revendication 7, **caractérisé en ce que**, dans la position de verrouillage, la tête (17) pivote si loin qu'elle s'appuie avec une précontrainte contre la butée (29).

9. Assemblage mécanique selon l'une quelconque des revendications 1 à 8, **caractérisé en ce que** l'articulation (18) est soutenue au niveau d'une arête de butée (27) du deuxième panneau (2).

10. Assemblage mécanique selon la revendication 9, **caractérisé en ce qu'**une force exercée d'en haut par le premier panneau (1) sur le bras de verrouillage (19) peut être transmise par l'intermédiaire de l'articulation (18) dans l'arête de butée (27) dans le deuxième panneau (2).

11. Assemblage mécanique selon l'une quelconque des revendications 1 à 10, **caractérisé en ce qu'**il est agencé au niveau du bras de verrouillage (19) un bras de soutien (42) qui peut pivoter conjointement au bras de verrouillage (19) et, lors du pivotement du bras de verrouillage, une extrémité libre du bras de soutien (42) peut pivoter en direction d'une surface de soutien (45) au niveau du deuxième panneau (2) pour s'appuyer dans la position de verrouillage contre la surface de soutien (45).

12. Assemblage mécanique selon l'une quelconque des revendications 1 à 11, **caractérisé en ce que** la surface de guidage (22) fait partie d'une rainure de couplage (14) ouverte vers le haut pour l'assemblage horizontal des panneaux (1, 2).

13. Assemblage mécanique selon l'une quelconque des revendications 1 à 12, **caractérisé en ce que** les bords (30) d'un panneau (1, 2) qui ne sont pas munis desdites languettes (6) sont munis d'un profil pour le verrouillage vertical qui comprend une lame (31) fixe qui peut être mise en prise avec une rainure (21) sous l'arête de verrouillage (8).

14. Assemblage mécanique selon l'une quelconque des revendications 1 à 13, **caractérisé en ce que** le deuxième panneau (2) dans la position de verrouillage repose sur une baguette de support (9) entre la face supérieure (4) du premier panneau (1) et la baguette de verrouillage (11), lequel deuxième panneau (2) est maintenu au niveau du premier panneau (1) soit par la pression du bras de verrouillage (19) contre l'arête de verrouillage (8) soit, dans le cas d'une lame (31) fixe selon la revendication 11, par la lame (31).

15. Assemblage mécanique selon l'une quelconque des revendications 1 à 14, **caractérisé en ce qu'**un mouvement de verrouillage du bras de verrouillage (19) entre une position de départ et une position de verrouillage est unidirectionnel et est dirigé exclusivement du deuxième panneau (2) vers le premier panneau (1).

16. Assemblage mécanique selon l'une quelconque des revendications 1 à 15, **caractérisé en ce que** le bras de verrouillage (19) dans la position de départ est agencé avec un premier angle (A1) supérieur à 0° par rapport au pied (16) et dans la position de verrouillage avec un deuxième angle (A2) par rapport au pied (16), lequel deuxième angle (A2) est supérieur d'au moins 30° au premier angle (A1).

17. Assemblage mécanique selon l'une quelconque des revendications 1 à 16, **caractérisé en ce que** le levier (20) présente au moins en partie un contour ondulé.

18. Procédé de fabrication de moyens d'assemblage pour un assemblage mécanique au niveau d'un bord (5) d'un panneau avec les caractéristiques selon l'une quelconque des revendications 1 à 17, dans lequel les moyens d'assemblage destinés à l'assemblage avec un panneau voisin sont prévus avec les étapes suivantes :
- fourniture d'un panneau (2) ;
- de la matière est enlevée d'une zone de bord (47) du panneau (2) afin de réaliser dans la zone de bord (47) une rainure de maintien (7) et, à distance de la rainure de maintien (7), une languette (6) ;
- un assemblage articulé (53) est réalisé entre la languette (6) et le panneau (2) ;
- la languette (6) est pivotée dans la rainure de maintien (7) ;
- la languette (6) est maintenue dans la rainure de maintien (7) et fait alors partie des moyens d'assemblage pour l'assemblage avec un panneau voisin, la languette (6) et la rainure de maintien (7) étant adaptées l'une à l'autre de telle sorte que la languette (6) ne peut pas glisser automatiquement hors de la rainure de maintien (7) ;
- l'assemblage articulé (53) est enlevé.

19. Procédé selon la revendication 18, **caractérisé en ce que** la languette (6) est fabriquée au moins partiellement à partir d'un contre-balancement (56) au niveau de la face inférieure (3) du panneau (2).

20. Procédé selon la revendication 18 ou 19, **caractérisé en ce que**, avant le pivotement de la languette (6) dans la rainure de maintien (7), un moyen de fixation (54) actif entre languette (6) et rainure de maintien (7) est placé au niveau du panneau (2).

21. Procédé selon l'une quelconque des revendications 18 à 20, **caractérisé en ce que**, lors de l'enlèvement de l'assemblage articulé (53), un profil est réalisé pour l'assemblage horizontal avec un autre panneau (1) du côté inférieur du deuxième panneau (2).
